# EUROPEAN PATENT APPLICATION

(11) **EP 4 704 348 A1**
(43) Date of publication of application: **04.03.2026**
(21) Application number: 25189683.3
(22) Date of filing: 15.07.2025
(51) Int. Cl.: H04B 1/00, H04B 1/10

(54) **WIRELESS CIRCUITRY WITH MULTI-TECHNOLOGY COEXISTENCE**

(30) Priority: 29.08.2024 US 202418819934; 29.08.2024 US 202418820002
(71) Applicant: Apple Inc., Cupertino, CA 95014 (US)
(72) Inventor: POURGHORBAN SAGHATI, Alireza, Cupertino, 95014 (US); MOKHTAR, Mohammed W., Cupertino, 95014 (US)
(74) Representative: Zacco Denmark A/S

(57) **Abstract**

An electronic device may have wireless circuitry that includes transceiver circuitry, first and second antennas, and first and second transmission line paths that couple the transceiver circuitry to the antennas. The transceiver circuitry may convey a first radio-frequency signal using a first radio access technology (RAT) over the first transmission line path and the first antenna and may concurrently convey a second radio-frequency signal using a second RAT over the second transmission line path and the second antenna. The wireless circuitry may include a switched notch filter on the first transmission line path and a switched bandpass filter on the second transmission line path. The switched notch filter may be a conjugate of the switched bandpass filter. The transceiver circuitry may scan the first radio-frequency signal over a set of bands while concurrently conveying the second radio-frequency signal without reconfiguring the filters.

## Description

This application claims priority to U.S. Patent Application No. 18/819,934, filed August 29, 2024, and U.S. Patent Application No. 18/820,002, filed August 29, 2024, which are hereby incorporated by reference herein in their entireties.

### Field

This disclosure relates generally to electronic devices, including electronic devices with wireless communications circuitry.

### Background

Electronic devices are often provided with wireless communications capabilities. An electronic device with wireless communications capabilities has wireless communications circuitry.

Wireless communications circuitry can support multiple different radio access technologies. If care is not taken, communications for different radio access technologies can conflict, deteriorating wireless performance of the wireless communications circuitry for one or both radio access technologies.

### Summary

An electronic device may include wireless circuitry for performing wireless communications. The wireless circuitry may include transceiver circuitry, first and second antennas, and first and second transmission line paths that couple the transceiver circuitry to the antennas. The transceiver circuitry may convey a first radio-frequency signal using a first radio access technology (RAT) over the first transmission line path and the first antenna. The transceiver circuitry may concurrently convey a second radio-frequency signal using a second RAT over the second transmission line path and the second antenna.

The wireless circuitry may include a switched notch filter on the first transmission line path and a switched bandpass filter on the second transmission line path. The switched notch filter may be a conjugate of the switched bandpass filter, in which a stopband of the switched notch filter overlaps a passband of the switched bandpass filter. The transceiver circuitry may scan the first radio-frequency signal over a set of bands while concurrently conveying the second radio-frequency signal without needing to reconfigure or adjust the switched bandpass filter and the switched notch filter. If desired, a fixed bandpass filter may be disposed on the first transmission line path between the switched notch filter and the transceiver circuitry. The fixed bandpass filter may have a passband that overlaps each band in the set of bands.

An aspect of the disclosure provides wireless circuitry. The wireless circuitry can include first transceiver circuitry that implements a first radio access technology (RAT). The wireless circuitry can include a first radio-frequency transmission line path coupled to the first transceiver circuitry. The wireless circuitry can include a switchable notch filter on the first radio-frequency transmission line path and having a stopband. The wireless circuitry can include second transceiver circuitry that implements a second RAT different from the first RAT. The wireless circuitry can include a second radio-frequency transmission line path coupled to the second transceiver circuitry. The wireless circuitry can include a switchable bandpass filter on the second radio-frequency transmission line path, wherein a passband of the switchable bandpass filter overlaps the stopband of the switchable notch filter.

An aspect of the disclosure provides wireless circuitry. The wireless circuitry can include first and second transmission line paths. The wireless circuitry can include transceiver circuitry coupled to the first and second transmission line paths, the transceiver circuitry being configured to convey a first radio-frequency (RF) signal of a first radio access technology (RAT) over the first transmission line path and being configured to convey a second RF signal of a second RAT different from the first RAT over the second transmission line path. The wireless circuitry can include first and second switches on the first transmission line path. The wireless circuitry can include first and second notch filters coupled in parallel between the first and second switches, the first notch filter having a first stopband and the second notch filter having a second stopband different from the first stopband. The wireless circuitry can include third and fourth switches on the second transmission line path. The wireless circuitry can include first and second bandpass filters coupled in parallel between the third and fourth switches, the first bandpass filter having a first passband that overlaps the first stopband and the second bandpass filter having a second passband that overlaps the second stopband.

An aspect of the disclosure provides an electronic device. The electronic device can include transceiver circuitry having first and second ports, the transceiver circuitry being configured to convey a first radio-frequency signal using a first radio access technology (RAT) over the first port and being configured to concurrently convey a second radio-frequency signal using a second RAT over the second port, the second RAT being different than the first RAT. The electronic device can include a first antenna. The electronic device can include a second antenna. The electronic device can include a first transmission line path that couples the first port to the first antenna. The electronic device can include a second transmission line path that couples the second port to the second antenna. The electronic device can include a switched notch filter on the first transmission line path. The electronic device can include a switched bandpass filter on the second transmission line path. The electronic device can include a radio-frequency front end (RFFE) module on the first transmission line path between the switched notch filter and the first port. The electronic device can include a bandpass filter on the first transmission line path between the RFFE module and the first port.

### Brief Description of the Drawings

FIG. 1 is a schematic diagram of illustrative circuitry in an electronic device in accordance with some embodiments.
FIG. 2 is a circuit diagram of illustrative wireless circuitry that supports concurrent communications in the same frequency range using different radio access technologies (RATs) in accordance with some embodiments.
FIG. 3 is a circuit diagram of additional illustrative wireless circuitry that supports concurrent communications in the same frequency range using different RATs in accordance with some embodiments.
FIGS. 4-6 are frequency diagrams showing how a first filter for a first RAT and a second filter for a second RAT may be implemented as conjugate filters that are switched between three different states while performing concurrent wireless communications in the same frequency range in accordance with some embodiments.
FIG. 7 is a flow chart of illustrative operations involved in performing concurrent wireless communications in the same frequency range using different RATs in accordance with some embodiments.

### Detailed Description

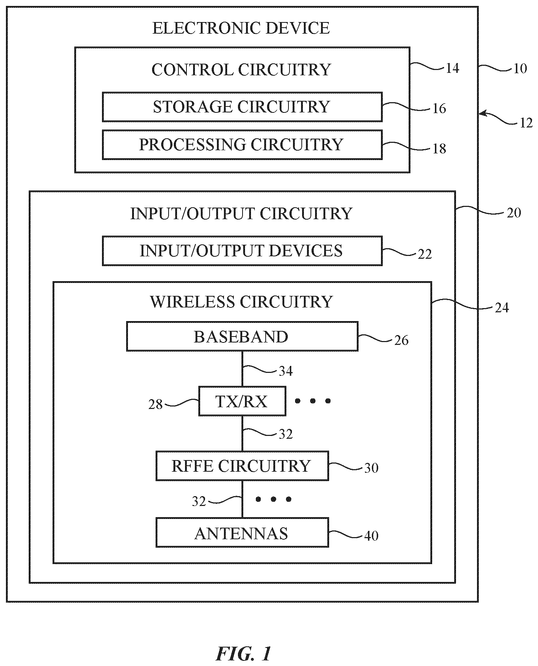

Electronic devices such as device 10 of FIG. 1 may be provided with wireless communications capabilities. Device 10 may be a portable electronic device or other suitable electronic device. For example, device 10 may be a laptop computer, a tablet computer, a somewhat smaller device such as a wrist-watch device, pendant device, headphone device (e.g., wireless earbuds), earpiece device, headset device (e.g., a head-mounted display device such as a virtual, mixed, or augmented reality headset, glasses, goggles, or helmet), ring device, or other wearable or miniature device, a handheld device such as a cellular telephone, a media player, or other small portable device. Device 10 may also be a set-top box, a desktop computer, a portable speaker, a media playback device, a peripheral device, a gaming controller, a user input device, a display into which a computer or other processing circuitry has been integrated, a display without an integrated computer, a wireless access point, a wireless base station, an electronic device incorporated into a kiosk, building, or vehicle, or other suitable electronic equipment.

Device 10 may include a housing such as housing 12. Housing 12, which may sometimes be referred to as a case, may be formed of plastic, glass, sapphire, ceramics, fiber composites, metal (e.g., stainless steel, aluminum, titanium, etc.), rubber, silicone, carbon fiber, fabric, other suitable materials, or a combination of these materials. In some situations, parts of housing 12 may be formed from dielectric or other low-conductivity material (e.g., glass, ceramic, plastic, sapphire, etc.). In other situations, housing 12 or at least some of the structures that make up housing 12 may be formed from metal elements.

As shown in FIG. 1, device 10 may include control circuitry 14. Control circuitry 14 may include storage such as storage circuitry 16. Storage circuitry 16 may include hard disk drive storage, nonvolatile memory (e.g., flash memory or other electrically-programmable-read-only memory configured to form a solid-state drive), volatile memory (e.g., static or dynamic random-access-memory), etc. Storage circuitry 16 may include storage that is integrated within device 10 and/or removable storage media.

Control circuitry 14 may include processing circuitry such as processing circuitry 18. Processing circuitry 18 may be used to control the operation of device 10. Processing circuitry 18 may include on one or more processors such as microprocessors, microcontrollers, digital signal processors, host processors, baseband processor integrated circuits, application specific integrated circuits, central processing units (CPUs), graphics processing units (GPUs), etc. Control circuitry 14 may be configured to perform operations in device 10 using hardware (e.g., dedicated hardware or circuitry), firmware, and/or software. Software code for performing operations in device 10 may be stored on storage circuitry 16 (e.g., storage circuitry 16 may include non-transitory (tangible) computer readable storage media that stores the software code). The software code may sometimes be referred to as program instructions, software, data, instructions, or code. Software code stored on storage circuitry 16 may be executed by processing circuitry 18.

Control circuitry 14 may be used to run software on device 10 such as satellite navigation applications, internet browsing applications, voice-over-internet-protocol (VOIP) telephone call applications, email applications, media playback applications, operating system functions, etc. To support interactions with external equipment, control circuitry 14 may be used in implementing communications protocols. Communications protocols that may be implemented using control circuitry 14 include internet protocols, wireless local area network (WLAN) protocols (e.g., IEEE 802.11 protocols - sometimes referred to as Wi-Fi^{®}), protocols for other short-range wireless communications links such as the Bluetooth^{®} protocol or other wireless personal area network (WPAN) protocols, IEEE 802.11ad protocols (e.g., ultra-wideband (UWB) protocols), cellular telephone protocols (e.g., 3G protocols, 4G (LTE) protocols, 3GPP Fifth Generation (5G) New Radio (NR) protocols, Sixth Generation (6G) protocols, sub-THz protocols, THz protocols, etc.), multiple-input and multiple-output (MIMO) protocols, antenna diversity protocols, satellite navigation system protocols (e.g., global positioning system (GPS) protocols, global navigation satellite system (GLONASS) protocols, etc.), satellite communications (satcom) protocols, non-Bluetooth protocols for ultra-low-latency audio streaming (e.g., an ultra-low latency audio (ULLA) protocol for accommodating high data rates such as data rates that support ultra-high definition spatial audio), antenna-based spatial ranging protocols, optical communications protocols, or any other desired communications protocols. Each communications protocol may be associated with a corresponding radio access technology (RAT) that specifies the physical connection methodology used in implementing the protocol (e.g., a WLAN RAT, a WPAN RAT, a ULLA RAT, a cellular telephone RAT such as a 4G RAT, 5G RAT, 3G RAT, 6G RAT, etc., a UWB RAT, etc.).

Device 10 may include input-output circuitry 20. Input-output circuitry 20 may include input-output devices 22. Input-output devices 22 may be used to allow data to be supplied to device 10 and to allow data to be provided from device 10 to external devices. Input-output devices 22 may include user interface devices, data port devices, and other input-output components. For example, input-output devices 22 may include touch sensors, displays, non-display light sources such as light-emitting diodes, audio devices such as speakers for producing audio output, wireless charging circuitry for receiving wireless power for charging a battery on device 10 and/or for transmitting wireless power for charging a battery on other devices, batteries and/or other energy storage devices, buttons (mechanical buttons, capacitive buttons, optical buttons, etc.), mechanical adjustment components, scrolling wheels, touch pads, key pads, keyboards, microphones, cameras, image sensors, infrared cameras, ambient light sensors, binocular three-dimensional image sensors, light detection and ranging (lidar) sensors, acoustic sensors such as microphones or ultrasonic sensors, touch sensors, force sensors (e.g., capacitive force sensors, strain gauges, resistive force sensors, etc.), proximity sensors (e.g., capacitive proximity sensors and/or optical proximity sensors), status indicators, audio jacks and other audio port components, digital data port devices, motion sensors for sensing motion, position, and/or orientation (e.g., accelerometers, gyroscopes, compasses, and/or inertial measurement units (IMUs)), contact sensors, pressure sensors, moisture sensors, temperature sensors, gas sensors, magnetic sensors, and/or any other desired sensors. In some configurations, keyboards, headphones, displays, pointing devices such as trackpads, mice, and joysticks, and other input-output devices may be coupled to device 10 using wired or wireless connections (e.g., some of input-output devices 22 may be peripherals that are coupled to a main processing unit or other portion of device 10 via a wired or wireless link).

Input-output circuitry 20 may include wireless circuitry 24 that supports wireless communications. Wireless circuitry 24 (sometimes also referred to herein as wireless communications circuitry 24) may include baseband circuitry such as baseband circuitry 26 (e.g., one or more baseband processors and/or other circuitry that operates at baseband), radio-frequency (RF) transceiver (TX/RX) circuitry 28, radio-frequency front end (RFFE) circuitry such as RFFE circuitry 30, and one or more antennas 40. If desired, wireless circuitry 24 may include multiple antennas 40 that are arranged into a phased antenna array (sometimes referred to as a phased array antenna) that conveys radio-frequency signals within a corresponding signal beam that can be steered in different directions.

Baseband circuitry 26 may be coupled to transceiver circuitry 28 over one or more baseband signal paths 34. Baseband circuitry 26 may include, for example, modulators (encoders) and demodulators (decoders) that operate on baseband signals. Transceiver circuitry 28 may include one or more transmitters, one or more receivers, one or more transceivers, one or more radios (e.g., radio chips), and/or one or more modems. Transceiver circuitry 28 may be coupled to one or more antennas 40 over corresponding radio-frequency transmission line paths 32 (sometimes referred to herein as radio-frequency signal paths 32). RFFE circuitry 30 may be disposed on one or more radio-frequency transmission line paths 32 between transceiver circuitry 28 and one or more antennas 40.

Transceiver circuitry 28 may convey radio-frequency signals using two or more different RATs. In implementations that are described herein as an example, transceiver circuitry 28 may include at least first radio-frequency (RF) circuitry that is implemented according to a first RAT X (e.g., RF circuitry that implements the physical connection methodology of RAT X and that conveys first radio-frequency signals of RAT X according to a wireless communications specification, protocol, and/or standard of RAT X) and second RF circuitry that is implemented according to a first second Y (e.g., RF circuitry that implements the physical connection methodology of RAT Y and that conveys second radio-frequency signals of RAT Y according to a wireless communications specification, protocol, and/or standard of RAT Y). In one potential implementation that is described herein as an example, RAT X may be a WLAN RAT (e.g., a Wi-Fi RAT) and RAT Y may be a ULLA RAT. Transceiver circuitry 28 may include additional RF circuitry that handles additional RATs if desired. If desired, both the first RF circuitry and the second RF circuitry in transceiver circuitry 28 may convey radio-frequency signals over the same set of one or more antennas 40 (e.g., device 10 may include at least one antenna 40 that conveys radio-frequency signals according to both RAT X and RAT Y). If desired, the first RF circuitry and the second RF circuitry in transceiver circuitry 28 may convey radio-frequency signals over different antennas 40 (e.g., device 10 may include at least one antenna 40 that conveys radio-frequency signals of RAT X but not RAT Y and at least one antenna 40 that conveys radio-frequency signals of RAT Y but not RAT X).

In general, any desired number of one or more radio-frequency transmission line paths 32 may be used to couple one or more ports of transceiver circuitry 28 (e.g., at least ports of RAT X and RAT Y) to a set of one or more antennas 40. If desired, different radio-frequency transmission line paths 32 may convey signals for RAT X and RAT Y or, if desired, one or more of the same radio-frequency transmission line paths 32 may convey signals for both RAT X and RAT Y. In general, wireless circuitry 24 may include any desired number of transceivers in transceiver circuitry 28, any desired number of radio-frequency transmission line paths 32, and any desired number of antennas 40.

Radio-frequency transmission line path(s) 32 may be coupled to antenna feeds on one or more antennas 40. Each antenna feed may, for example, include a positive antenna feed terminal and a ground antenna feed terminal. Each radio-frequency transmission line path 32 may have a positive transmission line signal path (e.g., a signal conductor) that is coupled to one or more positive antenna feed terminals on antenna(s) 40 and may have a ground transmission line signal path (e.g., a ground conductor) that is coupled to the corresponding ground antenna feed terminal for antenna(s) 40. This example is merely illustrative and, in general, antennas 40 may be fed using any desired antenna feeding scheme.

Each radio-frequency transmission line path 32 may include one or more radio-frequency transmission lines that are used to route radio-frequency signals within device 10. Radio-frequency transmission lines in device 10 may include coaxial cables, microstrip transmission lines, stripline transmission lines, edge-coupled microstrip transmission lines, edge-coupled stripline transmission lines, transmission lines formed from combinations of transmission lines of these types, etc. Radio-frequency transmission line paths 32 may also include radio-frequency connectors that couple multiple transmission lines together.

If desired, radio-frequency transmission lines in device 10 such as radio-frequency transmission lines in radio-frequency transmission line paths 32 may be integrated into rigid and/or flexible printed circuit boards. In some implementations, radio-frequency transmission line paths such as radio-frequency transmission line path 32 may also include transmission line conductors integrated within multilayer laminated structures (e.g., layers of a conductive material such as copper and a dielectric material such as a resin that are laminated together without intervening adhesive). The multilayer laminated structures may, if desired, be folded or bent in multiple dimensions (e.g., two or three dimensions) and may maintain a bent or folded shape after bending (e.g., the multilayer laminated structures may be folded into a particular three-dimensional shape to route around other device components and may be rigid enough to hold its shape after folding without being held in place by stiffeners or other structures). All of the multiple layers of the laminated structures may be batch laminated together (e.g., in a single pressing process) without adhesive (e.g., as opposed to performing multiple pressing processes to laminate multiple layers together with adhesive).

In performing wireless transmission, baseband circuitry 26 may generate baseband signals and may provide the baseband signals to transceiver circuitry 28 over baseband signal path(s) 34. Transceiver circuitry 28 may include circuitry for converting the baseband signals received from baseband circuitry 26 into corresponding radio-frequency signals. For example, transceiver circuitry 28 may include mixer circuitry for up-converting the baseband signals to radio frequencies prior to transmission over antenna(s) 40. Transceiver circuitry 28 may also include digital to analog converter (DAC) and/or analog to digital converter (ADC) circuitry for converting signals between digital and analog domains. Transceiver circuitry 28 may transmit the radio-frequency signals over antenna(s) 40 via one or more radio-frequency transmission line paths 32 and, if desired, RFFE circuitry 30. Antenna(s) 40 may transmit the radio-frequency signals to external wireless equipment (e.g., an external device such as another device 10, a pair of wireless earbuds, wireless headphones, one or more wireless speakers, a wireless access point, a wireless base station, an accessory device, a peripheral device, a head-mounted device, a communications satellite, etc.) by radiating the radio-frequency signals into free space (e.g., through a dielectric portion of housing 12).

In performing wireless reception, antenna(s) 40 may receive radio-frequency signals from the external wireless equipment. The received radio-frequency signals may be conveyed to transceiver circuitry 28 via radio-frequency transmission line path(s) 32 and, if desired, RFFE circuitry 48. Transceiver circuitry 28 may include circuitry for converting the received radio-frequency signals into corresponding baseband signals. For example, transceiver circuitry 28 may include one or more receivers having mixer circuitry for down-converting the received radio-frequency signals to baseband frequencies prior to conveying the baseband signals to baseband circuitry 26.

RFFE circuitry 30 may include radio-frequency front end components that operate on radio-frequency signals conveyed over the corresponding radio-frequency transmission line path(s) 32. The components of RFFE circuitry 30 may be integrated into one or more RFFE modules disposed on one or more radio-frequency transmission line paths 32. Each RFFE module may include corresponding radio-frequency components for operating on radio-frequency signals within a corresponding set of one or more frequency bands and/or for a corresponding set of one or more antennas 40. RFFE circuitry 30 may sometimes also be referred to herein simply as radio-frequency front end 30.

Each RFFE module in RFFE circuitry 30 may include corresponding radio-frequency components mounted a different respective substrate (e.g., a package or module substrate) such as a printed circuit board substrate (e.g., a rigid or flexible printed circuit board). If desired, one or more of the RFFE modules may be a multi-chip module (MCM) (e.g., having RF components integrated into different chips and mounted to a shared substrate). The radio-frequency components of each RFFE module may be formed from one or more integrated circuits and/or surface mount components (e.g., surface mount technology (SMT) components) mounted (e.g., soldered) to the corresponding substrate of that RFFE module, may be printed onto the substrate, may be embedded within the substrate, etc. Each RFFE module may include respective control circuitry, a respective control interface, a respective power interface (e.g., power supply pins), respective I/O pins, a respective digital interface, etc.

The radio-frequency front end components in each RFFE module of RFFE circuitry 30 may include switching circuitry (e.g., one or more radio-frequency switches), radio-frequency filter circuitry (e.g., low pass filters, high pass filters, notch filters, band pass filters, multiplexing circuitry, duplexer circuitry, diplexer circuitry, triplexer circuitry, switchplexer circuitry, etc.), impedance matching circuitry (e.g., circuitry that helps to match the impedance of antenna(s) 40 to the impedance of radio-frequency transmission line path(s) 32, circuitry that helps to match the impedance of some components in RFFE circuitry 30 to other components in RFFE circuitry 30, etc.), antenna tuning circuitry (e.g., networks of capacitors, resistors, inductors, and/or switches that adjust the frequency response of antennas 40), radio-frequency amplifier circuitry (e.g., power amplifier (PA) circuitry such as one or more power amplifiers and/or low-noise amplifier (LNA) circuitry such as one or more low noise amplifiers), radio-frequency (RF) coupler circuitry (e.g., for performing impedance measurements, signal phase and magnitude measurements, scattering parameter measurements, voltage standing wave ratio (VSWR measurements, etc.), power detector (PD) circuitry, charge pump circuitry, power management circuitry, low dropout (LDO) regulator circuitry, digital control and interface circuitry, and/or any other desired circuitry that operates on the radio-frequency signals transmitted and/or received by the antenna(s) 40 coupled to RFFE circuitry 30 over the corresponding radio-frequency transmission line path(s) 32.

While control circuitry 14 is shown separately from wireless circuitry 24 in the example of FIG. 1 for the sake of clarity, wireless circuitry 24 may include processing circuitry that forms a part of processing circuitry 18 and/or storage circuitry that forms a part of storage circuitry 16 of control circuitry 14 (e.g., portions of control circuitry 14 may be implemented on wireless circuitry 24). As an example, baseband circuitry 26 and/or portions of transceiver circuitry 28 (e.g., a host processor on transceiver circuitry 28) may form a part of control circuitry 14. The baseband circuitry may, for example, access a communication protocol stack on control circuitry 14 to: perform user plane functions at a PHY layer, MAC layer, RLC layer, PDCP layer, SDAP layer, and/or PDU layer, and/or to perform control plane functions at the PHY layer, MAC layer, RLC layer, PDCP layer, RRC, layer, and/or non-access stratum layer.

Wireless circuitry 24 may transmit and/or receive wireless signals within corresponding frequency bands of the electromagnetic spectrum (sometimes referred to herein as communications bands or simply as "bands"). The frequency bands handled by wireless circuitry 24 may include wireless local area network (WLAN) frequency bands (e.g., Wi-Fi^{®} (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi^{®} 6E band (e.g., from 5925-7125 MHz), a Wi-Fi^{®} 7 band, and/or other Wi-Fi^{®} bands (e.g., from 1875-5160 MHz), wireless personal area network (WPAN) frequency bands such as the 2.4 GHz Bluetooth^{®} band or other WPAN communications bands, ULLA bands, cellular telephone communications bands such as a cellular low band (LB) (e.g., a band between about 600 to 960 MHz), a cellular low-midband (LMB) (e.g., a band between about 1400 to 1550 MHz), a cellular midband (MB) (e.g., a band between about 1700 to 2200 MHz), a cellular high band (HB) (e.g., a band between 2300 to 2700 MHz), a cellular ultra-high band (UHB) (e.g., a band from 3300 to 5000 MHz, or other cellular communications bands between about 600 MHz and about 5000 MHz), 3G bands, 4G LTE bands, 5G New Radio Frequency Range 1 (FR1) bands below 10 GHz, 5G New Radio Frequency Range 2 (FR2) bands between 20 and 60 GHz, other centimeter or millimeter wave frequency bands between 10-100 GHz, near-field communications (NFC) frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, ultra-wideband (UWB) frequency bands that operate under the IEEE 802.15.4 protocol and/or other ultra-wideband communications protocols (e.g., a first UWB communications band at 6.5 GHz and/or a second UWB communications band at 8.0 GHz), communications bands under the family of 3GPP wireless communications standards, communications bands under the IEEE 802.XX family of standards, satellite communications bands such as an L-band, S-band (e.g., from 2-4 GHz), C-band (e.g., from 4-8 GHz), X-band, Ku-band (e.g., from 12-18 GHz), Ka-band (e.g., from 26-40 GHz), etc., industrial, scientific, and medical (ISM) bands such as an ISM band between around 900 MHz and 950 MHz or other ISM bands below or above 1 GHz, one or more unlicensed bands (e.g., unlicensed spectrum below 10 GHz such as one or more unlicensed bands between around 5 GHz and 10 GHz), one or more bands reserved for emergency and/or public services, and/or any other desired frequency bands of interest.

Antennas 40 may be formed using any desired antenna structures. For example, antennas 40 may include antennas with resonating elements that are formed from loop antenna structures, patch antenna structures, inverted-F antenna structures, slot antenna structures, planar inverted-F antenna structures, helical antenna structures, monopole antennas, dipoles, hybrids of these designs, etc. Parasitic elements may be included in antennas 40 to adjust antenna performance.

Filter circuitry, switching circuitry, impedance matching circuitry, and other circuitry may be interposed within radio-frequency transmission line path(s) 32, may be incorporated into RFFE circuitry 30, and/or may be incorporated into antenna(s) 40 (e.g., to support antenna tuning, to support operation in desired frequency bands, etc.). These components, sometimes referred to herein as antenna tuning components, may be adjusted (e.g., using control circuitry 28) to adjust the frequency response and wireless performance of antennas 40 over time.

In general, each transceiver circuitry 28 may cover (handle) any suitable communications (frequency) bands of interest. The transceiver circuitry may convey radio-frequency signals using antenna(s) 40 (e.g., antenna(s) 40 may convey the radio-frequency signals for the transceiver circuitry). The term "convey radio-frequency signals" as used herein means the transmission and/or reception of the radio-frequency signals (e.g., for performing unidirectional and/or bidirectional wireless communications with external wireless communications equipment). Antennas 40 may transmit the radio-frequency signals by radiating the radio-frequency signals into free space (or to free space through intervening device structures such as a dielectric layer of housing 12). Antennas 40 may additionally or alternatively receive the radio-frequency signals from free space (e.g., through intervening devices structures such as a dielectric layer of housing 12). The transmission and reception of radio-frequency signals by antennas 40 each involve the excitation or resonance of antenna currents on an antenna resonating element in the antenna by the radio-frequency signals within the frequency band(s) of operation of the antennas.

In general, device 10 may include any desired number of antennas 40. The antennas may be disposed at different locations on device 10. If desired, the antennas may support antenna diversity (e.g., in which different or best-performing antennas are switched into use for covering a particular frequency band at a given time given the current operating conditions of device 10) and/or multiple-input and multiple-output (MIMO) schemes (e.g., in which multiple antennas concurrent transmit or receive wireless data to maximize data throughput).

It may be desirable for device 10 to be able to perform wireless communications with a first external device using RAT X and with a second external device (or the first external device) using RAT Y. In some situations, it may be desirable for first radio-frequency signals of RAT X and second radio-frequency signals of RAT Y to be conveyed using a set of frequency bands in the unlicensed spectrum between around 5 GHz and 10 GHz. RAT Y may, for example, access one or more of the same bands of this spectrum as RAT X. To maximize data rate and minimize latency, transceiver circuitry 44 may concurrently convey first radio-frequency signals of RAT X and second radio-frequency signals of RAT Y. However, when RAT X and RAT Y both access the same set of frequency bands (e.g., from the unlicensed spectrum between around 5 GHz and 10 GHz), if care is not taken, it can be difficult to ensure that both RATs are able to concurrently convey radio-frequency signals without interfering with each other and without otherwise deteriorating wireless performance for one or both RATs.

In some implementations, the wireless circuitry includes simultaneous-in-band (SiB) filters to help ensure sufficient levels of coexistence for RAT X and RAT Y when accessing frequency bands of the same spectrum. However, the SiB filters allow RAT X and RAT Y to each access only one respective band of the spectrum at a time. The SiB filters need to be adjusted before either RAT can access a different band of the spectrum. This can be particularly detrimental in implementations where RAT X is Wi-Fi 7, as the transceiver circuitry will be unable to access other bands that may be required for communication under the Wi-Fi 7 protocol until additional resources (e.g., time, power, etc.) are expended to reconfigure the SiB filter(s) to support communications using a different band from the spectrum. While implementations in which RAT X is a Wi-Fi 7 RAT and in which RAT Y is an ULLA RAT are described herein as an example, RAT X and RAT Y may, in general, be any desired RATs that access the same or adjacent frequency bands from the same frequency range.

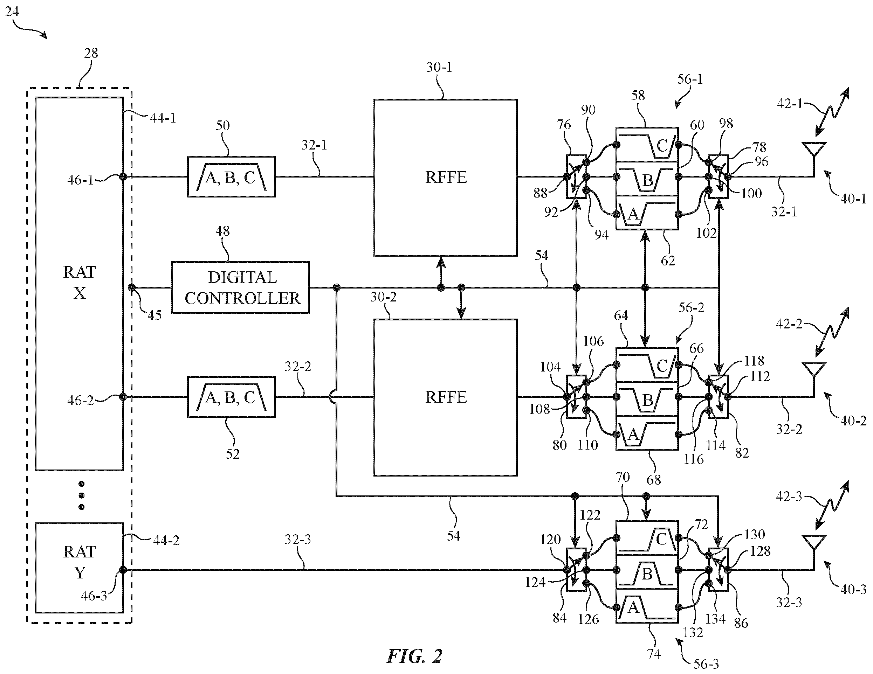

To mitigate these issues, wireless circuitry 24 may include conjugate (complementary) filters for RAT X and RAT Y. The conjugate filters may, for example, allow wireless circuitry 24 to support concurrent communications (coexistence) for both RAT X and RAT Y within the same frequency range/spectrum while allowing RAT X to sweep between different bands of the frequency range without requiring additional resources to reconfigure filters in wireless circuitry 24. FIG. 2 is a circuit diagram showing one example of how wireless circuitry 24 may include conjugate filters for RAT X and RAT Y.

As shown in FIG. 2, wireless circuitry 24 may include antennas 40-1, 40-2, and 40-3. Transceiver circuitry 28 may include RF circuitry 44-1 that implements RAT X (e.g., that conveys radio-frequency signals using RAT X). Transceiver circuitry 28 may also include RF circuitry 44-2 that implements RAT Y (e.g., that conveys radio-frequency signals using RAT Y). RF circuitry 44-1 may include or may be implemented on a first transceiver, radio, and/or chip in transceiver circuitry 28 (e.g., a first core or portion of transceiver circuitry 28). RF circuitry 44-2 may include or may be implemented on a second transceiver, radio, and/or chip in transceiver circuitry 28 (e.g., a second core or portion of transceiver circuitry 24). RF circuitry 44-1 may therefore sometimes also be referred to herein as radio 44-1, transceiver 44-1, transceiver circuitry 44-1, chip 44-1, or transceiver core 44-1 whereas RF circuitry 44-2 is sometimes also be referred to herein as radio 44-2, transceiver 44-2, transceiver circuitry 44-2, chip 44-2, or transceiver core 44-2. Alternatively, RF circuitry 44-1 and RF circuitry 44-2 may be formed from different respective portions or cores of the same transceiver, radio, and/or chip in transceiver circuitry 28.

RF circuitry 44-1 may include a first set of one or more transmit chains, a first set of one or more receive chains, a first set of one or more mixers (e.g., upconverters and/or downconverters), a first set of one or more power amplifiers, a first set of one or more gain stages, a first set of one or more low noise amplifiers, a first set of one or more ADCs, a first set of one or more DACs, a first set of impedance matching circuitry, a first set of transformers, and/or other transceiver circuitry that conveys radio-frequency signals of RAT X. RF circuitry 44-2 may include a second set of one or more transmit chains, a second set of one or more receive chains, a second set of one or more mixers (e.g., upconverters and/or downconverters), a second set of one or more power amplifiers, a second set of one or more gain stages, a second set of one or more low noise amplifiers, a second set of one or more ADCs, a second set of one or more DACs, a second set of impedance matching circuitry, a second set of transformers, and/or other transceiver circuitry that conveys radio-frequency signals of RAT Y.

RF circuitry 44-1 and RF circuitry 44-2 may each include one or more respective radio-frequency ports 46. Each port 46 may be coupled to a respective transmit chain and/or receive chain in transceiver circuitry 24. If desired, transmit and receive chains in transceiver circuitry 28 may be coupled together using filter circuitry, duplexer circuitry, diplexer circuitry, switching circuitry, etc. In the example of FIG. 2, RF circuitry 44-1 includes at least port 46-1 and port 46-2 and RF circuitry 44-2 includes at least port 46-3. This is illustrative and non-limiting. If desired, port 46-2 may be omitted from RF circuitry 44-1, RF circuitry 44-1 may include more than two ports 46, and/or RF circuitry 44-2 may include more than one port 46.

Port 46-1 may be communicatively and operably coupled to antenna 40-1 over radio-frequency transmission line path 32-1. Port 46-2 may be communicatively and operably coupled to antenna 40-2 over radio-frequency transmission line path 32-2. Port 46-3 may be communicatively and operably coupled to antenna 40-3 over radio-frequency transmission line path 32-3. Antennas 40-1, 40-2, and 40-3 may be disposed at different locations on device 10 for diversity, MIMO, and/or multi-path purposes (e.g., at different corners of device 10, at upper or lower ends of device 10, at the front of device 10, at the rear of device 10, etc.). If desired, a first RFFE module 30-1 may be disposed on radio-frequency transmission line path 32-1 and/or a second RFFE module 30-2 may be disposed on radio-frequency transmission line path 32-2. Alternatively, the same RFFE module 30 may be disposed on both radio-frequency transmission line paths 32-1 and 32-2. In the example of FIG. 2, there are no RFFE modules disposed on radio-frequency transmission line path 32-3 (e.g., radio-frequency transmission line path 32-3 is free of RFFE modules). Alternatively, an RFFE module may be disposed on radio-frequency transmission line path 32-3 or radio-frequency transmission line path 32-3 may pass through RFFE module 30-1 or RFFE module 30-2.

RF circuitry 44-1 may convey first radio-frequency signals 42-1 of RAT X over port 46-1, radio-frequency transmission line path 32-1, and antenna 40-1. If desired, radio-frequency components (e.g., amplifiers, filters, switches, signal couplers, etc.) on RFFE 30-1 may operate on the radio-frequency signals 42-1 conveyed over radio-frequency transmission line path 32-1. Concurrent with RF circuitry 44-1 conveying radio-frequency signals 42-1, RF circuitry 44-2 may convey second radio-frequency signals 42-3 of RAT Y over port 46-3, radio-frequency transmission line path 32-3, and antenna 40-3. Concurrent with RF circuitry 44-1 conveying radio-frequency signals 42-1 and/or RF circuitry 44-2 conveying radio-frequency signals 42-3, RF circuitry 44-1 may convey third radio-frequency signals 42-2 of RAT X over port 46-2, radio-frequency transmission line path 32-2, and antenna 40-2. If desired, radio-frequency components (e.g., amplifiers, filters, switches, signal couplers, etc.) on RFFE module 30-2 may operate on the radio-frequency signals 42-3 conveyed over radio-frequency transmission line path 32-2.

To help support coexistence of RAT X and RAT Y, wireless circuitry 24 may include switched/switchable filter circuitry 56 disposed on each radio-frequency transmission line path 32. For example, first switched filter circuitry 56-1 may be disposed on radio-frequency transmission line path 32-1 (e.g., between RFFE module 30-1 and antenna 40-1), second switched filter circuitry 56-2 may be disposed on radio-frequency transmission line path 32-2 (e.g., between RFFE module 30-2 and antenna 40-2), and third switched filter circuitry 56-3 may be disposed on radio-frequency transmission line path 32-3. If desired, to further meet stringent spurious signal specifications associated with RAT X (e.g., Wi-Fi 7), an additional filter such as bandpass filter (BPF) 50 may be interposed on radio-frequency transmission line path 32-1 between RFFE module 30-1 and port 46-1 and an additional filter such as BPF 52 may be interposed on radio-frequency transmission line path 32-2 between RFFE module 30-2 and port 46-2.

RF circuitry 44-1 may access a set of bands of a corresponding frequency range for use in conveying radio-frequency signals of RAT X. This means that RF circuitry 44-1 may scan or sweep over the set of bands and may use one of those bands (e.g., the band from the set of bands exhibiting the strongest wireless performance for RAT X, the band from the set of bands scheduled for device 10 within a RAT X communications schedule for device 10, etc.) to convey the first and/or third radio-frequency signals of RAT X. RF circuitry 44-2 may concurrently access the same set of bands of the frequency range for use in conveying radio-frequency signals of RAT Y. As such, RF circuitry 44-2 may scan or sweep over the set of bands and may use one of those bands (e.g., the band from the set of bands exhibiting the strongest wireless performance for RAT Y, the band from the set of bands scheduled for device 10 within a RAT Y communications schedule for device 10, etc.) to convey the second third radio-frequency signals of RAT Y.

In some implementations that are described herein as an example, the frequency range handled by RF circuitry 44-1 and RF circuitry 44-2 includes unlicensed spectrum between around 5 GHz and around 10 GHz. The set of bands includes at least a first band A, a second band B, and a third band B within the frequency range. Band B may be at higher frequencies than band A. Band C may be at higher frequencies than band B. In some implementations that are described herein as an example, band A may be Unlicensed National Information Infrastructure (UNII) band 1 from 5150 MHz to 5250 MHz 1 (sometimes also referred to as band UNII-1), band B may be UNII band 3 from 5725 MHz to 5850 MHz (sometimes also referred to as band UNII-3), and band C may be UNII band 5 from 5925 MHz to 6425 MHz (sometimes also referred to herein as band UNII-5). This is illustrative and non-limiting. In general, bands A, B, and C may be any desired bands. If desired, the set of bands may include only bands A and B, only bands A and C, or only bands B and C. If desired, the set of bands may include additional bands (e.g., UNII bands) beyond bands A, B, and C. Bands A, B, and C may be any desired bands that are relatively close together at any desired frequencies.

Switched filter circuitry 56-1 may be a switchable notch filter. The switchable notch filter may include a set of notch filters. Each filter in the set of notch filters may have a respective stopband that overlaps a different one of the bands in the set of bands. Switched filter circuitry 56-1 is sometimes also referred to herein as switched notch filter circuitry 56-1, switchable notch filter circuitry 56-1, switched notch filter 56-1, switchable notch filter 56-1, switched filter 56-1, switchable filter 56-1, or switched filter circuit 56-1.

As shown in FIG. 2, for example, switched filter circuitry 56-1 may include a first notch filter 58, a second notch filter 60, and a third notch filter 62. Notch filter 62 may have a first stopband overlapping band A. Notch filter 60 may have a second stopband overlapping band B. Notch filter 58 may have a third stopband overlapping band C. Notch filters 58, 60, and 62 may include any desired resistive, capacitive, and/or inductive components coupled together in any desired manner between RFFE module 30-1, antenna 40-1, and/or ground. The stopbands of notch filters 58, 60, and 62 may be fixed (e.g., non-adjustable) or may be adjustable (tunable) over time.

Switched filter circuitry 56-1 may also include switching circuitry that selectively activates one of notch filters 58, 60, or 62 at a given time. The active notch filter is coupled into radio-frequency transmission line path 32-1 (e.g., in series between RFFE module 30-1 and antenna 40-1) and is used to filter the radio-frequency signals 42-1 conveyed along radio-frequency transmission line path 32-1 while the other notch filters are inactive and decoupled from radio-frequency transmission line path 32-1. The switching circuitry may include, for example, a first switch 76 coupled in series between the notch filters and RFFE module 30-1 and a second switch 78 coupled in series between the notch filters and antenna 40-1 (e.g., notch filters 58, 60, and 62 may be coupled in parallel between switches 76 and 78).

Switch 76 may have a first terminal 88 communicatively coupled to RFFE module 30-1 over the portion of radio-frequency transmission line path 32-1 between RFFE module 30-1 and switched filter circuitry 56-1. Switch 76 may have a set of additional terminals, where each additional terminal is coupled to a different respective notch filter in switched filter circuitry 56-1. For example, switch 76 may include a second terminal 90 coupled to notch filter 58, a third terminal 92 coupled to notch filter 60, and a fourth terminal 94 coupled to notch filter 62. Switch 76 may couple terminal 88 and thus RFFE module 30-1 to a selected one of terminals 90, 92, or 94 at a given time. Switch 76 may be implemented as a single-pole three-throw (SP3T) switch or using any other desired set of one or more switches that switchably couple terminal 88 to a selected one of notch filters 58, 60, and 62 at a given time.

Switch 78 may have a first terminal 96 communicatively coupled to antenna 40-1 over the portion of radio-frequency transmission line path 32-1 between switched filter circuitry 56-1 and antenna 40-1. Switch 78 may have a set of additional terminals, where each additional terminal is coupled to a different respective notch filter in switched filter circuitry 56-1. For example, switch 78 may include a second terminal 98 coupled to notch filter 58 (e.g., notch filter 58 may be coupled in series between terminals 90 and 98), a third terminal 100 coupled to notch filter 60 (e.g., notch filter 60 may be coupled in series between terminals 92 and 100), and a fourth terminal 102 coupled to notch filter 62 (e.g., notch filter 62 may be coupled in series between terminals 94 and 102). Switch 78 may couple terminal 96 and thus antenna 40-1 to a selected one of terminals 98, 100, or 102 at a given time. Switch 78 may be implemented as a SP3T switch or using any other desired set of one or more switches that switchably couple terminal 96 to a selected one of notch filters 58, 60, and 62 at a given time. Terminals 88-102 are sometimes also referred to herein as switch terminals or switch ports.

BPF 50 may include any desired resistive, capacitive, and/or inductive components coupled together in any desired manner between RFFE module 30-1, port 46-1, and/or ground. BPF 50 may have a passband that overlaps each band in the set of bands. The passband of BPF 50 may, for example, overlap bands A, B, and C. BPF 50 may pass radio-frequency signals in bands A, B, and C while blocking, filtering, and/or removing other frequencies from the radio-frequency signals conveyed over radio-frequency transmission line path 32-1 between RFFE module 30-1 and port 46-1. If desired, the passband of BPF 50 may be fixed/constant to help minimize signal loss (e.g., BPF 50 may be a fixed or non-adjustable BPF).

Switched filter circuitry 56-2 may be a switchable notch filter. The switchable notch filter may include a set of notch filters. Each filter in the set of notch filters may have a respective stopband that overlaps a different one of the bands in the set of bands. Switched filter circuitry 56-2 is sometimes also referred to herein as switched notch filter circuitry 56-2, switchable notch filter circuitry 56-2, switched notch filter 56-2, switchable notch filter 56-2, switched filter 56-2, switchable filter 56-2, or switched filter circuit 56-2. As shown in FIG. 2, for example, switched filter circuitry 56-2 may include a first notch filter 64, a second notch filter 66, and a third notch filter 68. Notch filter 68 may have a first stopband overlapping band A. Notch filter 66 may have a second stopband overlapping band B. Notch filter 64 may have a third stopband overlapping band C. Notch filters 64, 66, and 68 may include any desired resistive, capacitive, and/or inductive components coupled together in any desired manner between RFFE module 30-2, antenna 40-2, and/or ground. The stopbands of notch filters 64, 66, and 68 may be fixed (e.g., non-adjustable) or may be adjustable (tunable) over time.

Switched filter circuitry 56-2 may also include switching circuitry that selectively activates one of notch filters 64, 66, or 68 at a given time. The active notch filter is coupled into radio-frequency transmission line path 32-2 (e.g., in series between RFFE module 30-2 and antenna 40-2) and is used to filter the radio-frequency signals 42-3 conveyed along radio-frequency transmission line path 32-2 while the other notch filters are inactive and decoupled from radio-frequency transmission line path 32-2. The switching circuitry may include, for example, a first switch 80 coupled in series between the notch filters and RFFE module 30-2 and a second switch 82 coupled in series between the notch filters and antenna 40-2 (e.g., notch filters 64, 66, and 68 may be coupled in parallel between switches 80 and 82).

Switch 80 may have a first terminal 104 communicatively coupled to RFFE module 30-2 over the portion of radio-frequency transmission line path 32-2 between RFFE module 30-2 and switched filter circuitry 56-2. Switch 80 may have a set of additional terminals, where each additional terminal is coupled to a different respective notch filter in switched filter circuitry 56-2. For example, switch 80 may include a second terminal 106 coupled to notch filter 64, a third terminal 108 coupled to notch filter 66, and a fourth terminal 110 coupled to notch filter 68. Switch 80 may couple terminal 104 and thus RFFE module 30-2 to a selected one of terminals 106, 108, or 110 at a given time. Switch 80 may be implemented as a SP3T switch or using any other desired set of one or more switches that switchably couple terminal 104 to a selected one of notch filters 64, 66, and 68 at a given time.

Switch 82 may have a first terminal 112 communicatively coupled to antenna 40-2 over the portion of radio-frequency transmission line path 32-2 between switched filter circuitry 56-2 and antenna 40-2. Switch 82 may have a set of additional terminals, where each additional terminal is coupled to a different respective notch filter in switched filter circuitry 56-1. For example, switch 82 may include a second terminal 118 coupled to notch filter 64 (e.g., notch filter 64 may be coupled in series between terminals 106 and 118), a third terminal 116 coupled to notch filter 66 (e.g., notch filter 66 may be coupled in series between terminals 108 and 116), and a fourth terminal 114 coupled to notch filter 68 (e.g., notch filter 68 may be coupled in series between terminals 110 and 114). Switch 82 may couple terminal 112 and thus antenna 40-2 to a selected one of terminals 118, 116, or 114 at a given time. Switch 82 may be implemented as a SP3T switch or using any other desired set of one or more switches that switchably couple terminal 112 to a selected one of notch filters 64, 66, and 68 at a given time. Terminals 104-118 are sometimes also referred to herein as switch terminals or switch ports.

BPF 52 may include any desired resistive, capacitive, and/or inductive components coupled together in any desired manner between RFFE module 30-2, port 46-2, and/or ground. BPF 52 may have a passband that overlaps each band in the set of bands. The passband of BPF 52 may, for example, overlap bands A, B, and C. BPF 52 may pass radio-frequency signals in bands A, B, and C while blocking, filtering, and/or removing other frequencies from the radio-frequency signals conveyed over radio-frequency transmission line path 32-2 between RFFE module 30-2 and port 46-2. If desired, the passband of BPF 52 may be fixed/constant to help minimize signal loss (e.g., BPF 52 may be a fixed or non-adjustable BPF).

Switched filter circuitry 56-3 may be a switchable bandpass filter. The switchable bandpass filter may include a set of bandpass filters (BPFs). Each BPF in the set of BPFs may have a respective passband that overlaps a different one of the bands in the set of bands. Switched filter circuitry 56-3 is sometimes also referred to herein as switched bandpass filter circuitry 56-3, switchable bandpass filter circuitry 56-3, switched bandpass filter 56-3, switchable bandpass filter 56-3, switched filter 56-3, switchable filter 56-3, or switched filter circuit 56-3.

As shown in FIG. 2, for example, switched filter circuitry 56-3 may include a first BPF 70, a second BPF 72, and a third BPF 74. BPF 74 may have a first passband overlapping band A. BPF 72 may have a second passband overlapping band B. BPF 70 may have a third passband overlapping band C. BPFs 70-74 may include any desired resistive, capacitive, and/or inductive components coupled together in any desired manner between port 46-3, antenna 40-3, and/or ground. The passbands of BPFs 70-74 may be fixed (e.g., non-adjustable) or may be adjustable (tunable) over time.

Switched filter circuitry 56-3 may also include switching circuitry that selectively activates one of BPFs 70-74 at a given time. The active BPF is coupled into radio-frequency transmission line path 32-3 (e.g., in series between port 46-3 and antenna 40-3) and is used to filter the radio-frequency signals 42-2 conveyed along radio-frequency transmission line path 32-3 while the other BPFs are inactive and decoupled from radio-frequency transmission line path 32-3. The switching circuitry may include, for example, a first switch 84 coupled in series between the BPFs and port 46-3 and a second switch 86 coupled in series between the BPFs and antenna 40-3 (e.g., BPFs 70-74 may be coupled in parallel between switches 84 and 86).

Switch 84 may have a first terminal 120 communicatively coupled to port 46-3 over the portion of radio-frequency transmission line path 32-3 between RF circuitry 44-2 and switched filter circuitry 56-3. Switch 84 may have a set of additional terminals, where each additional terminal is coupled to a different respective BPF in switched filter circuitry 56-3. For example, switch 84 may include a second terminal 122 coupled to BPF 70, a third terminal 124 coupled to BPF 72, and a fourth terminal 126 coupled to BPF 74. Switch 84 may couple terminal 120 and thus port 46-3 to a selected one of terminals 122, 124, or 126 at a given time. Switch 84 may be implemented as a SP3T switch or using any other desired set of one or more switches that switchably couple terminal 120 to a selected one of BPFs 70-74 at a given time.

Switch 86 may have a first terminal 128 communicatively coupled to antenna 40-3 over the portion of radio-frequency transmission line path 32-3 between switched filter circuitry 56-3 and antenna 40-3. Switch 86 may have a set of additional terminals, where each additional terminal is coupled to a different respective BPF in switched filter circuitry 56-3. For example, switch 86 may include a second terminal 130 coupled to BPF 70 (e.g., BPF 70 may be coupled in series between terminals 122 and 130), a third terminal 132 coupled to BPF 72 (e.g., BPF 72 may be coupled in series between terminals 124 and 132), and a fourth terminal 126 coupled to BPF 74 (e.g., BPF 74 may be coupled in series between terminals 126 and 134). Switch 86 may couple terminal 128 and thus antenna 40-3 to a selected one of terminals 130, 132, or 134 at a given time. Switch 86 may be implemented as a SP3T switch or using any other desired set of one or more switches that switchably couple terminal 128 to a selected one of notch filters 70-74 at a given time. Terminals 120-134 are sometimes also referred to herein as switch terminals or switch ports. Switches 76-86 may be radio-frequency switches (e.g., switches that convey radio-frequency signals with minimal signal reflection and attenuation).

Wireless circuitry 24 may include control circuitry such as digital controller 48 (e.g., in control circuitry 14 of FIG. 1). Digital controller 48 may be coupled to one or more control inputs (e.g., digital I/O pins) and/or power inputs (e.g., power pins) of RFFE module 30-1, one or more control inputs (e.g., digital I/O pins) and/or power inputs (e.g., power pins) of RFFE module 30-2, a control input (terminal) of switch 76, a control input (terminal) of switch 78, a control input (terminal) of switch 84, and a control input (terminal) of switch 86 over one or more control paths 54. Control paths 54 may include digital control paths, analog control paths (e.g., coupled to analog control circuitry), and/or power supply voltage lines, as examples. The digital control paths in control paths 54 are sometimes also referred to collectively herein as a digital backbone or digital control bus of wireless circuitry 24.

Digital controller 48 may provide one or more power supply voltages to RFFE module 30-1 and RFFE module 30-2 via power supply voltage lines in control path(s) 54 (e.g., for powering amplifier circuitry and/or other active components on the RFFE modules). Digital controller 48 may also provide digital control signals to switches 76, 78, 80, 82, 84, and 86 over digital control paths in control path(s) 54. The digital control signals may control, adjust, set and/or switch the states of switched filter circuitry 56-1, 56-2, and 56-3. If desired, digital controller 48 may receive signals (e.g., signal measurements, reports, control signals, coupled radio-frequency signals, etc.) from RFFE module 30-1 and RFFE module 30-2 over control path(s) 54. If desired, digital controller 48 may also be coupled to a control port 45 of transceiver circuitry 28 (e.g., for coordinating the control of RFFE modules 30-1 and 30-2 and the states of switched filter circuitry 56-1, 56-2, and 56-3 with the time and frequency resources of the radio-frequency signals being conveyed by transceiver circuitry 28).

Switched filter circuitry 56-1 may have a different respective state (mode) for each band in the set of bands. Switched filter circuitry 56-1 may be switched into and may be switched between the different states by a digital control signal received from digital controller 48 over control path(s) 54. For instance, in the example of FIG. 2, switched filter circuitry 56-1 may be switched between first, second, and third states (sometimes also referred to herein as modes, switch modes, or switch states).

In the first state of switched filter circuitry 56-1, switch 76 is placed in a first switch state in which terminal 88 is coupled to terminal 90 and switch 78 is placed in a first switch state in which terminal 96 is coupled to terminal 98. This activates notch filter 58 by coupling notch filter 58 in series between RFFE 30-1 and antenna 40-1 (e.g., notch filter 58 is coupled into radio-frequency transmission line path 32-1 and is communicatively or operably interposed between RFFE 30-1 and antenna 40-1). At the same time, notch filters 60 and 62 are inactive (e.g., decoupled from radio-frequency transmission line path 32-1). While switched filter circuitry 56-1 is in the first state, radio-frequency transmission line path 32-1 may convey radio-frequency signals 42-1 between port 46-1 and antenna 40-1 at frequencies outside of band C (e.g., at frequencies within bands A or B). Notch filter 58 passes radio-frequency signals at frequencies outside of its stopband (e.g., at frequencies outside of band C such as frequencies within bands A or B) while filtering out, blocking, or removing radio-frequency signals at frequencies in its stopband (e.g., in frequency band C).

In the second state of switched filter circuitry 56-1, switch 76 is placed in a second switch state in which terminal 88 is coupled to terminal 92 and switch 78 is placed in a second switch state in which terminal 96 is coupled to terminal 100. This activates notch filter 60 by coupling notch filter 60 in series between RFFE module 30-1 and antenna 40-1 (e.g., notch filter 60 is coupled into radio-frequency transmission line path 32-1 and is communicatively or operably interposed between RFFE module 30-1 and antenna 40-1). At the same time, notch filters 58 and 62 are inactive or switched out of use (e.g., decoupled from radio-frequency transmission line path 32-1). While switched filter circuitry 56-1 is in the second state, radio-frequency transmission line path 32-1 may convey radio-frequency signals 42-1 between port 46-1 and antenna 40-1 at frequencies outside of band B (e.g., at frequencies within bands A or C). Notch filter 60 passes radio-frequency signals at frequencies outside of its stopband (e.g., at frequencies outside of band B such as frequencies within bands A or C) while filtering out, blocking, or removing radio-frequency signals at frequencies in its stopband (e.g., in frequency band C).

In the third state of switched filter circuitry 56-1, switch 76 is placed in a third switch state in which terminal 88 is coupled to terminal 94 and switch 78 is placed in a second switch state in which terminal 96 is coupled to terminal 102. This activates notch filter 62 by coupling notch filter 62 in series between RFFE module 30-1 and antenna 40-1 (e.g., notch filter 62 is coupled into radio-frequency transmission line path 32-1 and is communicatively or operably interposed between RFFE module 30-1 and antenna 40-1). At the same time, notch filters 58 and 60 are inactive or switched out of use (e.g., decoupled from radio-frequency transmission line path 32-1). While switched filter circuitry 56-1 is in the third state, radio-frequency transmission line path 32-1 may convey radio-frequency signals 42-1 between port 46-1 and antenna 40-1 at frequencies outside of band A (e.g., at frequencies within bands B or C). Notch filter 62 passes radio-frequency signals at frequencies outside of its stopband (e.g., at frequencies outside of band A such as frequencies within bands B or C) while filtering out, blocking, or removing radio-frequency signals at frequencies in its stopband (e.g., in frequency band A).

Similarly, switched filter circuitry 56-2 may have a different respective state (mode) for each band in the set of bands handled by RF circuitry 44-1. Switched filter circuitry 56-2 may be switched into and may be switched between the different states by a digital control signal received from digital controller 48 over control path(s) 54. For instance, in the example of FIG. 2, switched filter circuitry 56-2 may be switched between first, second, and third states (sometimes also referred to herein as modes, switch modes, or switch states).

In the first state of switched filter circuitry 56-2, switch 80 is placed in a first switch state in which terminal 104 is coupled to terminal 106 and switch 82 is placed in a first switch state in which terminal 112 is coupled to terminal 118. This activates notch filter 64 by coupling notch filter 64 in series between RFFE module 30-2 and antenna 40-2 (e.g., notch filter 64 is coupled into radio-frequency transmission line path 32-2 and is communicatively or operably interposed between RFFE module 30-2 and antenna 40-2). At the same time, notch filters 66 and 68 are inactive or switched out of use (e.g., decoupled from radio-frequency transmission line path 32-2). While switched filter circuitry 56-2 is in the first state, radio-frequency transmission line path 32-2 may convey radio-frequency signals 42-2 between port 46-2 and antenna 40-2 at frequencies outside of band C (e.g., at frequencies within bands A or B). Notch filter 64 passes radio-frequency signals at frequencies outside of its stopband (e.g., at frequencies outside of band C such as frequencies within bands A or B) while filtering out, blocking, or removing radio-frequency signals at frequencies in its stopband (e.g., in frequency band C).

In the second state of switched filter circuitry 56-2, switch 80 is placed in a second switch state in which terminal 104 is coupled to terminal 108 and switch 82 is placed in a second switch state in which terminal 112 is coupled to terminal 116. This activates notch filter 66 by coupling notch filter 66 in series between RFFE module 30-2 and antenna 40-2 (e.g., notch filter 66 is coupled into radio-frequency transmission line path 32-2 and is communicatively or operably interposed between RFFE module 30-2 and antenna 40-2). At the same time, notch filters 64 and 68 are inactive or switched out of use (e.g., decoupled from radio-frequency transmission line path 32-2). While switched filter circuitry 56-2 is in the second state, radio-frequency transmission line path 32-2 may convey radio-frequency signals 42-2 between port 46-2 and antenna 40-2 at frequencies outside of band B (e.g., at frequencies within bands A or C). Notch filter 66 passes radio-frequency signals at frequencies outside of its stopband (e.g., at frequencies outside of band B such as frequencies within bands A or C) while filtering out, blocking, or removing radio-frequency signals at frequencies in its stopband (e.g., in frequency band B).

In the third state of switched filter circuitry 56-2, switch 80 is placed in a third switch state in which terminal 104 is coupled to terminal 110 and switch 82 is placed in a third switch state in which terminal 112 is coupled to terminal 114. This activates notch filter 68 by coupling notch filter 68 in series between RFFE module 30-2 and antenna 40-2 (e.g., notch filter 68 is coupled into radio-frequency transmission line path 32-2 and is communicatively or operably interposed between RFFE module 30-2 and antenna 40-2). At the same time, notch filters 64 and 66 are inactive or switched out of use (e.g., decoupled from radio-frequency transmission line path 32-2). While switched filter circuitry 56-2 is in the third state, radio-frequency transmission line path 32-2 may convey radio-frequency signals 42-2 between port 46-2 and antenna 40-2 at frequencies outside of band A (e.g., at frequencies within bands B or C). Notch filter 68 passes radio-frequency signals at frequencies outside of its stopband (e.g., at frequencies outside of band A such as frequencies within bands B or C) while filtering out, blocking, or removing radio-frequency signals at frequencies in its stopband (e.g., in frequency band A).

Switched filter circuitry 56-3 may have a different respective state (mode) for each band in the set of bands handled by RF circuitry 44-2. Switched filter circuitry 56-3 may be switched into and may be switched between the different states by a digital control signal received from digital controller 48 over control path(s) 54. For instance, in the example of FIG. 2, switched filter circuitry 56-3 may be switched between first, second, and third states (sometimes also referred to herein as modes, switch modes, or switch states).

In the first state of switched filter circuitry 56-3, switch 84 is placed in a first switch state in which terminal 120 is coupled to terminal 122 and switch 86 is placed in a first switch state in which terminal 128 is coupled to terminal 130. This activates BPF 70 by coupling BPF 70 in series between port 46-3 and antenna 40-3 (e.g., BPF 70 is coupled into radio-frequency transmission line path 32-3 and is communicatively or operably interposed between port 46-3 and antenna 40-3). At the same time, BPFs 72 and 74 are inactive or switched out of use (e.g., decoupled from radio-frequency transmission line path 32-3). While switched filter circuitry 56-3 is in the first state, radio-frequency transmission line path 32-3 may convey radio-frequency signals 42-3 between port 46-3 and antenna 40-3 at frequencies within band C. BPF 70 passes radio-frequency signals at frequencies within the passband of BPF 70 (e.g., at frequencies within band C) while filtering out, blocking, or removing radio-frequency signals at frequencies outside its passband (e.g., in frequency bands A and B).

In the second state of switched filter circuitry 56-3, switch 84 is placed in a second switch state in which terminal 120 is coupled to terminal 124 and switch 86 is placed in a second switch state in which terminal 128 is coupled to terminal 132. This activates BPF 72 by coupling BPF 72 in series between port 46-3 and antenna 40-3 (e.g., BPF 72 is coupled into radio-frequency transmission line path 32-3 and is communicatively or operably interposed between port 46-3 and antenna 40-3). At the same time, BPFs 70 and 74 are inactive or switched out of use (e.g., decoupled from radio-frequency transmission line path 32-3). While switched filter circuitry 56-3 is in the second state, radio-frequency transmission line path 32-3 may convey radio-frequency signals 42-3 between port 46-3 and antenna 40-3 at frequencies within band B. BPF 72 passes radio-frequency signals at frequencies within the passband of BPF 72 (e.g., at frequencies within band B) while filtering out, blocking, or removing radio-frequency signals at frequencies outside its passband (e.g., in frequency bands A and C).

In the third state of switched filter circuitry 56-3, switch 84 is placed in a third switch state in which terminal 120 is coupled to terminal 126 and switch 86 is placed in a second switch state in which terminal 128 is coupled to terminal 134. This activates BPF 74 by coupling BPF 74 in series between port 46-3 and antenna 40-3 (e.g., BPF 74 is coupled into radio-frequency transmission line path 32-3 and is communicatively or operably interposed between port 46-3 and antenna 40-3). At the same time, BPFs 70 and 72 are inactive or switched out of use (e.g., decoupled from radio-frequency transmission line path 32-3). While switched filter circuitry 56-3 is in the third state, radio-frequency transmission line path 32-3 may convey radio-frequency signals 42-3 between port 46-3 and antenna 40-3 at frequencies within band A. BPF 74 passes radio-frequency signals at frequencies within the passband of BPF 74 (e.g., at frequencies within band A) while filtering out, blocking, or removing radio-frequency signals at frequencies outside its passband (e.g., in frequency bands B and C).

Switched filter circuitry 56-3 may be a conjugate or complementary filter to switched filter circuitry 56-2 and switched filter circuitry 56-1. This means that, at any given time, switched filter circuitry 56-3 is controlled to exhibit a passband at the same frequencies as the stopband of switched filter circuitry 56-1 and switched filter circuitry 56-2. For example, while switched filter circuitry 56-1 is in its first state (e.g., coupling notch filter 58 between RFFE module 30-1 and antenna 40-1) and/or while switched filter circuitry 56-2 is in its first state (e.g., coupling notch filter 64 between RFFE module 30-2 and antenna 40-2), switched filter circuitry 56-3 may concurrently operate in its first state (e.g., coupling BPF 70 between port 46-3 and antenna 40-3).

This configures RF circuitry 44-1, radio-frequency transmission lines 32-1 and 32-2, and antennas 40-1 and 40-2 to convey radio-frequency signals at frequencies outside of band C while RF circuitry 44-2, radio-frequency transmission line path 32-3, and antenna 40-3 are concurrently configured to convey radio-frequency signals 42-3 at frequencies within band C. The stopband of switched filters 56-1 and 56-2 prevents leaked, reflected, and/or received radio-frequency signals at frequencies within band C from passing between RF circuitry 44-1 and antennas 40-1/40-2, mitigating interference or signal deterioration for communications using RAT X due to the concurrent operation of RF circuitry 44-2 under RAT Y. Similarly, switched filter circuitry 56-3 may prevent leaked, reflected, and/or received radio-frequency signals at frequencies within bands A and B from passing between RF circuitry 44-2 and antenna 40-3, mitigating interference or signal deterioration for communications using RAT Y due to the concurrent operation of RF circuitry 44-1 under RAT X.

In addition, RF circuitry 44-1 may access any of the bands in the set of bands that are outside of the passband of switched filter circuitry 56-3 (e.g., either band A or band B) while switched filter circuitry 56-1, switched filter circuitry 56-2, and switched filter circuitry 56-3 are in their respective first states (e.g., without needing to expend any resources to reconfigure or adjust switched filter circuitry 56-1, switched filter circuitry 56-2, and switched filter circuitry 56-3). RF circuitry 44-1 may, for example, sweep or scan between at least bands A and B and may switch between conveying radio-frequency signals in bands A and B while RF circuitry 44-2 continues to convey radio-frequency signals 42-3 in band C, all without any reconfiguration or adjustment to switched filters 56-1, 56-2, and 56-3.

Similarly, while switched filter circuitry 56-1 is in its second state (e.g., coupling notch filter 60 between RFFE module 30-1 and antenna 40-1) and/or while switched filter circuitry 56-2 is in its second state (e.g., coupling notch filter 66 between RFFE module 30-2 and antenna 40-2), switched filter circuitry 56-3 may concurrently operate in its second state (e.g., coupling BPF 72 between port 46-3 and antenna 40-3). This configures RF circuitry 44-1, radio-frequency transmission lines 32-1 and 32-2, and antennas 40-1 and 40-2 to convey radio-frequency signals at frequencies outside of band B while RF circuitry 44-2, radio-frequency transmission line path 32-3, and antenna 40-3 are concurrently configured to convey radio-frequency signals 42-3 at frequencies within band B. The stopband of switched filters 56-1 and 56-2 prevents leaked, reflected, and/or received radio-frequency signals at frequencies within band B from passing between RF circuitry 44-1 and antennas 40-1/40-2, mitigating interference or signal deterioration for communications using RAT X due to the concurrent operation of RF circuitry 44-2 under RAT Y. Similarly, switched filter circuitry 56-3 may prevent leaked, reflected, and/or received radio-frequency signals at frequencies within bands A and C from passing between RF circuitry 44-2 and antenna 40-3, mitigating interference or signal deterioration for communications using RAT Y due to the concurrent operation of RF circuitry 44-1 under RAT X.

In addition, RF circuitry 44-1 may access any of the bands in the set of bands that are outside of the passband of switched filter circuitry 56-3 (e.g., either band A or band C) while switched filter circuitry 56-1, switched filter circuitry 56-2, and switched filter circuitry 56-3 are in their respective second states (e.g., without needing to expend any resources to reconfigure or adjust switched filter circuitry 56-1, switched filter circuitry 56-2, and switched filter circuitry 56-3). RF circuitry 44-1 may, for example, sweep or scan between at least bands A and C and may switch between conveying radio-frequency signals in bands A and C while RF circuitry 44-2 continues to convey radio-frequency signals 42-3 in band B, without any reconfiguration or adjustment to switched filters 56-1, 56-2, and 56-3.

In addition, while switched filter circuitry 56-1 is in its third state (e.g., coupling notch filter 62 between RFFE module 30-1 and antenna 40-1) and/or while switched filter circuitry 56-2 is in its third state (e.g., coupling notch filter 68 between RFFE module 30-2 and antenna 40-2), switched filter circuitry 56-3 may concurrently operate in its third state (e.g., coupling BPF 74 between port 46-3 and antenna 40-3). This configures RF circuitry 44-1, radio-frequency transmission lines 32-1 and 32-2, and antennas 40-1 and 40-2 to convey radio-frequency signals at frequencies outside of band A while RF circuitry 44-2, radio-frequency transmission line path 32-3, and antenna 40-3 are concurrently configured to convey radio-frequency signals at frequencies within band A. The stopband of switched filter circuitries 56-1 and 56-2 prevents leaked, reflected, and/or received radio-frequency signals at frequencies within band A from passing between RF circuitry 44-1 and antennas 40-1/40-2, mitigating interference or signal deterioration for communications using RAT X due to the concurrent operation of RF circuitry 44-2 under RAT Y. Similarly, switched filter circuitry 56-3 may prevent leaked, reflected, and/or received radio-frequency signals at frequencies within bands B and C from passing between RF circuitry 44-2 and antenna 40-3, mitigating interference or signal deterioration for communications using RAT Y due to the concurrent operation of RF circuitry 44-1 under RAT X.

In addition, RF circuitry 44-1 may access any of the bands in the set of bands that are outside of the passband of switched filter circuitry 56-3 (e.g., either band B or band C) while switched filter circuitry 56-1, switched filter circuitry 56-2, and switched filter circuitry 56-3 are in their third second states (e.g., without needing to expend any resources to reconfigure or adjust switched filter circuitry 56-1, switched filter circuitry 56-2, and switched filter circuitry 56-3). RF circuitry 44-1 may, for example, sweep or scan between at least bands B and C and may switch between conveying radio-frequency signals in bands B and C while RF circuitry 44-2 continues to convey radio-frequency signals 42-3 in band A, without any reconfiguration or adjustment to switched filters 56-1, 56-2, and 56-3.

The example of FIG. 2 is illustrative and non-limiting. The set of bands handled by RF circuitry 44-1 and RF circuitry 44-2 may include any desired number of two or more bands. In implementations where the set of bands includes two bands, one of the notch filters in switched filter circuitry 56-1 may be omitted, one of the notch filters in switched filter circuitry 56-2 may be omitted, and one of the BPFs in switched filter circuitry 56-3 may be omitted. In implementations where the set of bands includes more than three bands, switched filter circuitry 56-1 may include more than three notch filters, switched filter circuitry 56-2 may include more than three notch filters, and switched filter circuitry 56-3 may include more than three BPFs.

If desired, one or more of the notch filters in switched filter circuitry 56-1 may be implemented as a tunable notch filter having a corresponding stopband that is adjusted by a digital control signal received from digital controller 48 over control path(s) 54. The control signal may, for example, adjust one or more switched, variable inductors, variable capacitors, etc., in the tunable notch filter(s). In these implementations, digital controller 48 may control and adjust the active stopband of switched filter circuitry 56-1 to align with the passband of switched filter circuitry 56-3 by adjusting the stopband of the tunable notch filter(s) and/or by adjusting the states of switches 76 and 78. Alternatively, switched filter circuitry 56-1 may be implemented using a single tunable notch filter. In implementations where switched filter circuitry 56-1 includes a single tunable notch filter, switches 76 and 78 may be omitted.

Additionally or alternatively, if desired, one or more of the notch filters in switched filter circuitry 56-2 may be implemented as a tunable notch filter having a corresponding stopband that is adjusted by a digital control signal received from digital controller 48 over control path(s) 54. The control signal may, for example, adjust one or more switched, variable inductors, variable capacitors, etc., in the tunable notch filter(s). In these implementations, digital controller 48 may control and adjust the active stopband of switched filter circuitry 56-2 to align with the passband of switched filter circuitry 56-3 by adjusting the stopband of the tunable notch filter(s) and/or by adjusting the states of switches 80 and 82. Alternatively, switched filter circuitry 56-2 may be implemented using a single tunable notch filter. In implementations where switched filter circuitry 56-2 includes a single tunable notch filter, switches 80 and 82 may be omitted.

Additionally or alternatively, if desired, one or more of the BPFs in switched filter circuitry 56-3 may be implemented as a tunable BPF having a corresponding passband that is adjusted by a digital control signal received from digital controller 48 over control path(s) 54. The control signal may, for example, adjust one or more switched, variable inductors, variable capacitors, etc., in the tunable BPF(s). In these implementations, digital controller 48 may control and adjust the active passband of switched filter circuitry 56-3 to align with the stopband of switched filter circuitry 56-1 and/or switched filter circuitry 56-2 by adjusting the passband of the tunable BPF(s) and/or by adjusting the states of switches 84 and 86. Alternatively, switched filter circuitry 56-3 may be implemented using a single tunable BPF. In implementations where switched filter circuitry 56-3 includes a single tunable BPF, switches 84 and 86 may be omitted.

In implementations where port 46-2 is omitted from RF circuitry 44-1, radio-frequency transmission line path 32-1, RFFE module 30-2, BPF 52, switched filter circuitry 56-2, and antenna 40-2 may also be omitted from wireless circuitry 24. If desired, antenna 40-1, antenna 40-2, and/or antenna 40-3 may be coupled to one or more additional ports of transceiver circuitry 28 (not shown) for conveying additional radio-frequency signals of additional RATs (e.g., cellular telephone signals, WPAN signals, satellite navigation signals, satcom signals, UWB signals, NFC signals, etc.). Additional RF circuitry may be disposed on radio-frequency transmission line paths 32-1, 32-2, and/or 32-3 and/or may be integrated into transceiver circuitry 28. If desired, radio-frequency transmission line paths 32-1, 32-2, and 32-3 may all be coupled to the same antenna 40 or, if desired, two of radio-frequency transmission line paths 32-1, 32-2, and 32-3 may be coupled to a first antenna 40 whereas the third of radio-frequency transmission line paths 32-1, 32-2, and 32-3 is coupled to a second antenna 40. Additional switching and/or filter circuitry may be included in wireless circuitry 24 to accommodate these types of shared antenna implementations if desired.

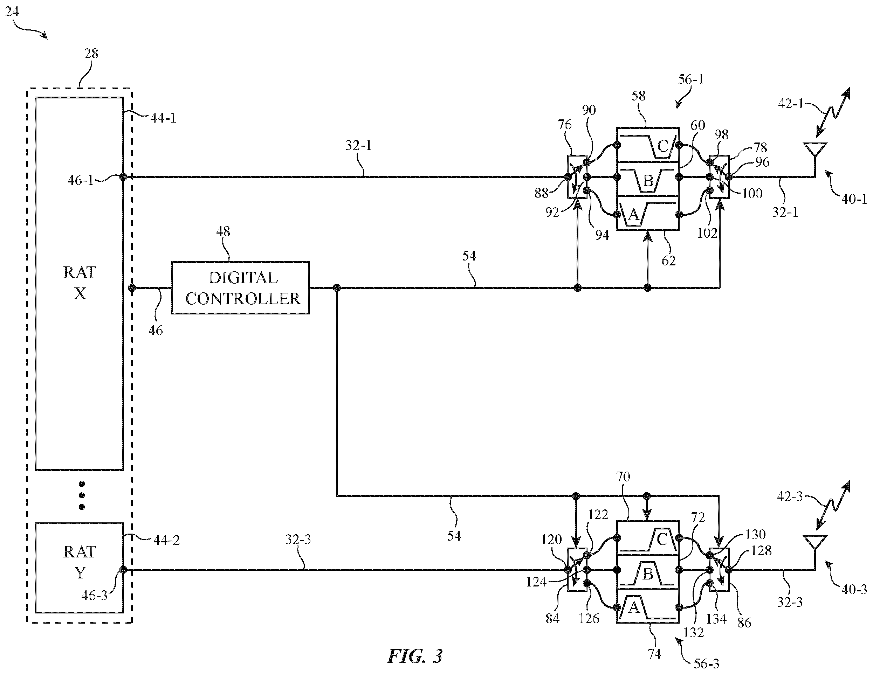

FIG. 3 is a circuit diagram showing one example in which port 46-2, frequency transmission line path 32-1, RFFE module 30-2, BPF 52, switched filter circuitry 56-2, and antenna 40-2 are omitted from wireless circuitry 24. In the example of FIG. 3, RFFE module 30-1 (FIG. 2) has also been omitted from radio-frequency transmission line path 32-1. Alternatively, RFFE module 30-1 may be interposed on radio-frequency transmission line path 32-1 of FIG. 3 (e.g., between port 46-1 and switched filter circuitry 56-1) and/or an RFFE module may be interposed on radio-frequency transmission line path 32-3 of FIG. 3 (e.g., between port 46-3 and switched filter circuitry 56-3).

Because switched filter circuitry 56-3 is a conjugate of switched filter circuitry 56-1, switched filter circuitry 56-1 may be configured (e.g., using control signals received from digital controller 48) to exhibit a stopband that overlaps and/or aligns with the passband of switched filter circuitry 56-3 at any given time. For example, switched filter circuitry 56-1 may be in its first state while switched filter circuitry 56-3 is in its first state, switched filter circuitry 56-1 may be in its second state while switched filter circuitry 56-3 is in its second state, and switched filter circuitry 56-1 may be in its third state while switched filter circuitry 56-3 is in its third state. Filters 70-74 of FIGS. 2 and 3 may be implemented using any desired filter circuitry and may be coupled into or out of radio-frequency transmission line path 32-3 using any desired switches arranged in any desired manner (e.g., the switches shown in FIGS. 2 and 3 are illustrative and non-limiting).

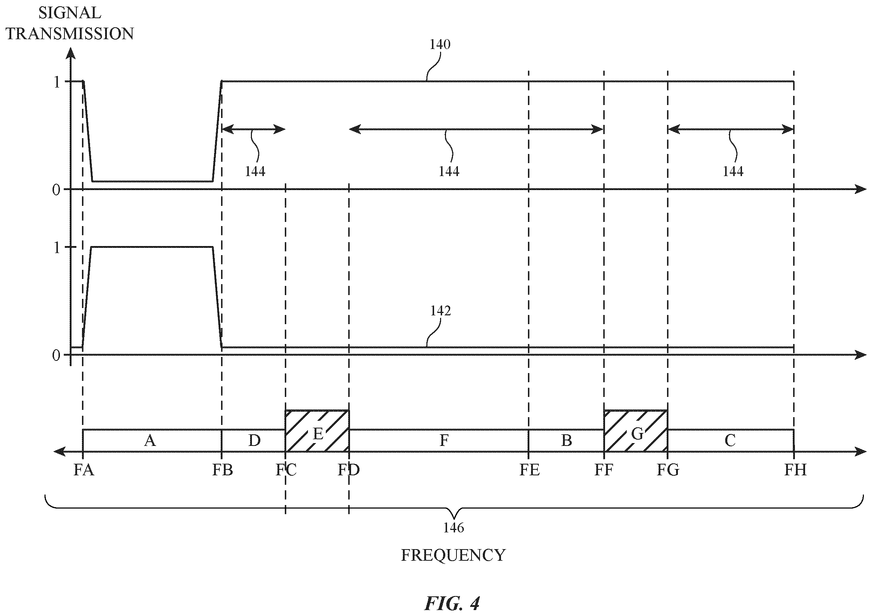

FIGS. 4-6 are frequency diagrams showing the conjugate/complementary operation of switched filter circuitry 56-1 and switched filter circuitry 56-3 of FIGS. 2 and 3 while placed in each of the first, second, and third states. FIG. 4 illustrates the operation of switched filter circuitry 56-1 and switched filter circuitry 56-3 in the third state (e.g., while notch filter 62 of switched filter circuitry 56-1 is active and while BPF 74 of switched filter circuitry 56-3 is active).

As shown in FIG. 4, RF circuitry 44-1 and RF circuitry 44-2 may both convey radio-frequency signals in a set of bands within a frequency range 146. Frequency range 146 may include a range of frequencies at least from frequency FA to frequency FH. Frequency range 146 may be, for example, an unlicensed spectrum, ISM range, or frequency range extending at least from FA = 5 GHz to FH = 6425 MHz. This is illustrative and, in general, frequencies FA and FH may be any desired frequencies.

Frequency range 146 may contain bands A, B, and C. Band B may be at higher frequencies than band A. Band C may be at higher frequencies than band B. Bands A, B, and/or C may be contiguous with each other or may, as shown in the example of FIG. 4, be non-contiguous with each other. Frequency range 146 may, for example, include one or more intervening bands between bands A and B such as bands D, E, and F and/or may include one or more intervening bands between bands B and C such as band G. Band A may extend from frequency FA to frequency FB. Band D may extend from frequency FB to frequency FC. Band E may extend from frequency FC to frequency FD. Band F may extend from frequency FD to frequency FE. Band B may extend from frequency FE to frequency FF. Band G may extend from frequency FF to frequency FG. Band C may extend from frequency FG to frequency FH.

In one exemplary and non-limiting implementation, band A may be UNII band 1 extending from FA = 5150 MHz to FB = 5250 MHz, band B may be UNII band 2A from FB = 5250 to FC = 5350 MHz (sometimes also referred to as band UNII-2A), band E may be an unused band from FC = 5350 MHz to FD = 5470 MHz (e.g., a dead or idle zone such as UNII band 2B), band F may be UNII band 2C from FD = 5470 MHz to FE = 5725 MHz (sometimes also referred to as band UNII-2C), band B may be UNII band 3 from FE = 5725 MHz to FF = 5850 MHz, band G may be an unused band from FF = 5850 MHz to FG = 5925 MHz (e.g., a dead or idle zone such as UNII band 4), and band C may be UNII band 5 from FG = 5925 MHz to FH = 6425 MHz. In this example, the set of bands accessed by RF circuitry 44-1 and RF circuitry 44-2 includes at least bands A, B, and C. Transceiver circuitry 28 may use both RAT X (e.g., Wi-Fi 7) and RAT Y (e.g., ULLA) to convey radio-frequency signals in the same bands A, B, and C, which may represent unlicensed spectrum not otherwise used for other purposes or RATs.

These bands may be particularly suitable for communications under RAT X and RAT Y using the conjugate filtering architecture shown in FIGS. 2 and 3 (e.g., due to their close proximity in frequency but with sufficient spacing between bands A, B, and C, as provided by bands D, E, F, and G, to accommodate finite roll-off in the stopbands and passbands of the filters). However, this example is illustrative and non-limiting. In general, frequency range 146 may include any desired frequencies, bands A, B, and C may include any desired bands at any desired frequencies, and any desired number of zero, one, or more than one band may be between bands A and B and/or between bands B and C.

Curve 142 of FIG. 4 plots the amount of signal transmission (e.g., transfer function, transmission coefficient, etc.) by switched filter circuitry 56-3 for RAT Y (FIGS. 2 and 3) while operated in its third state. As shown by curve 142, when switched filter circuitry 56-3 is in its third state, switched filter circuitry 56-3 exhibits a passband (e.g., peak or close to 100% signal transmission) in or overlapping band A. At the same time, switched filter circuitry 56-3 blocks, filters, or removes signals (e.g., exhibits minimum or close to 0% signal transmission) at frequencies outside of band A. This configures RF circuitry 44-2, port 46-3, radio-frequency transmission line path 32-3, and antenna 40-3 to convey radio-frequency signals 42-3 in band A without radio-frequency signals outside of band A passing along radio-frequency transmission line path 32-3 between antenna 40-3 and port 46-3.

At the same time, switchable circuitry 56-1 may be placed in the third state of switched circuitry 56-1. Curve 140 of FIG. 4 plots the amount of signal transmission by switched filter circuitry 56-1 for RAT X (FIGS. 2 and 3) while operated in its third state. As shown by curve 140, when switched filter circuitry 56-1 is in its third state, switched filter circuitry 56-1 exhibits a stopband (e.g., minimum or close to 0% signal transmission) in (overlapping) band A. At the same time, switched filter circuitry 56-1 passes/transmits signals (e.g., exhibits peak or close to 100% signal transmission) at frequencies outside of band A. This configures RF circuitry 44-1, port 46-1, radio-frequency transmission line path 32-1, and antenna 40-1 to convey radio-frequency signals 42-1 outside of band A without radio-frequency signals within band A passing along radio-frequency transmission line path 32-1 between antenna 40-1 and port 46-1.

If desired, as shown by arrows 144, RF circuitry 44-1 may still access any of the bands of frequency range 146 outside of band A for RAT X while RF circuitry 44-2 concurrently conveys radio-frequency signals 42-3 within band A for RAT Y, without needing to change the state of switched filter circuitry 56-1 or switched filter circuitry 56-3. This may include accessing bands such as bands D and/or F if desired. RF circuitry 44-1 may, for example, scan or sweep radio-frequency signals 42-1 through one or more of the bands of frequency range 146 outside of band A while RF circuitry 44-2 concurrently conveys radio-frequency signals 42-3 within band A for RAT Y (e.g., without any adjustment to the state of switched filter circuitry 56-1, the stopband of switched filter circuitry 56-1, switched filter circuitry 56-3, or the passband of switched filter circuitry 56-3).

As one example, during a first time period (e.g., one or more time slots, frame periods, or other time intervals associated with RAT X and/or RAT Y), RF circuitry 44-1, switched filter circuitry 56-1 in the third state (e.g., notch filter 62), and antenna 40-1 may convey radio-frequency signals 42-1 in band B. During the first time period, RF circuitry 44-2, switched filter circuitry 56-3 in the third state (e.g., BPF 74), and antenna 40-3 may convey radio-frequency signals 42-3 in band A. During a second time period after the first time period, RF circuitry 44-1, switched filter circuitry 56-1 in the third state (e.g., notch filter 62), and antenna 40-1 may convey radio-frequency signals 42-1 in band C. During the second time period, RF circuitry 44-2, switched filter circuitry 56-3 in the third state (e.g., BPF 74), and antenna 40-3 may continue to convey radio-frequency signals 42-3 in band A. RF circuitry 44-1 may, for example, change the frequency of a local oscillator signal provided to a mixer in RF circuitry 44-1 between the first and second time periods (e.g., to accommodate a change in the carrier frequency of radio-frequency signals 42-1 between band B and band C between the first and second time periods). However, digital controller 48 may perform no adjustments to switched filter circuitry 56-1 and switched filter circuitry 56-3 between the first and second time periods (e.g., switched filter circuitry 56-1 and switched filter circuitry 56-3 may remain in their respective third states and may exhibit the same stopband and passband continuously from the start of the first time period until the end of the second time period).

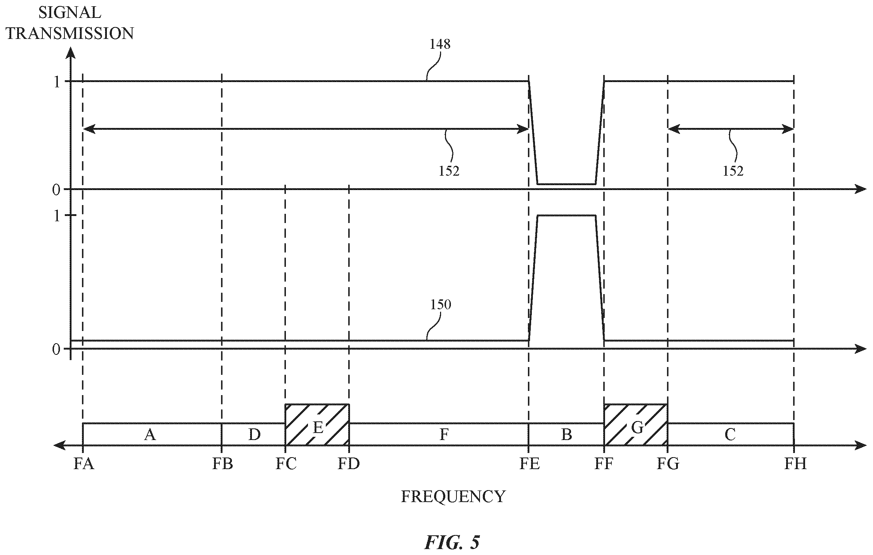

FIG. 5 illustrates the operation of switched filter circuitry 56-1 and switched filter circuitry 56-3 in the second state (e.g., while notch filter 60 of switched filter circuitry 56-1 is active and while BPF 72 of switched filter circuitry 56-3 is active). Curve 150 of FIG. 5 plots the signal transmission of switched filter circuitry 56-3 for RAT Y (FIGS. 2 and 3) while operated in its second state. As shown by curve 150, when switched filter circuitry 56-3 is in its second state, switched filter circuitry 56-3 exhibits a passband in (overlapping) band B. At the same time, switched filter circuitry 56-3 blocks, filters, or removes signals (e.g., exhibits minimum or close to 0% signal transmission) at frequencies outside of band B. This configures RF circuitry 44-2, port 46-3, radio-frequency transmission line path 32-3, and antenna 40-3 to convey radio-frequency signals 42-3 in band B without radio-frequency signals outside of band B passing along radio-frequency transmission line path 32-3 between antenna 40-3 and port 46-3.

At the same time, switched circuitry 56-1 may be placed in the second state of switched circuitry 56-1. Curve 148 of FIG. 5 plots the signal transmission of switched filter circuitry 56-1 for RAT X and RF circuitry 44-1 (FIGS. 2 and 3) while operated in its second state. As shown by curve 148, when switched filter circuitry 56-1 is in its second state, switched filter circuitry 56-1 exhibits a stopband in band B. At the same time, switched filter circuitry 56-1 passes/transmits signals at frequencies outside of band B. This configures RF circuitry 44-1, port 46-1, radio-frequency transmission line path 32-1, and antenna 40-1 to convey radio-frequency signals 42-1 outside of band B without radio-frequency signals within band B passing along radio-frequency transmission line path 32-1 between antenna 40-1 and port 46-1.

If desired, as shown by arrows 152, RF circuitry 44-1 may still access any of the bands of frequency range 146 outside of band B for RAT X while RF circuitry 44-2 concurrently conveys radio-frequency signals 42-3 within band B for RAT Y, without needing to change the state of switched filter circuitry 56-1 or switched filter circuitry 56-3. This may include accessing bands such as bands D and/or F if desired. RF circuitry 44-1 may, for example, scan or sweep radio-frequency signals 42-1 through one or more of the bands of frequency range 146 outside of band B while RF circuitry 44-2 concurrently conveys radio-frequency signals 42-3 within band A for RAT Y (e.g., without any adjustment to the state of switched filter circuitry 56-1, the stopband of switched filter circuitry 56-1, switched filter circuitry 56-3, or the passband of switched filter circuitry 56-3).

As one example, during a third time period different from the first and second time periods described above in connection with FIG. 4, RF circuitry 44-1, switched filter circuitry 56-1 in the second state (e.g., notch filter 60), and antenna 40-1 may convey radio-frequency signals 42-1 in band A. During the third time period, RF circuitry 44-2, switched filter circuitry 56-3 in the second state (e.g., BPF 72), and antenna 40-3 may convey radio-frequency signals 42-3 in band B. During a fourth time period after the third time period and different from the first and second time periods, RF circuitry 44-1, switched filter circuitry 56-1 in the second state (e.g., notch filter 60), and antenna 40-1 may convey radio-frequency signals 42-1 in band C. During the fourth time period, RF circuitry 44-2, switched filter circuitry 56-3 in the second state (e.g., BPF 72), and antenna 40-3 may continue to convey radio-frequency signals 42-3 in band B. RF circuitry 44-1 may, for example, change the frequency of a local oscillator signal provided to a mixer in RF circuitry 44-1 between the third and fourth time periods (e.g., to accommodate a change in the carrier frequency of radio-frequency signals 42-1 between band A and band C between the third and fourth time periods). However, digital controller 48 may perform no adjustments to switched filter circuitry 56-1 and switched filter circuitry 56-3 between the third and fourth time periods (e.g., switched filter circuitry 56-1 and switched filter circuitry 56-3 may remain in their respective second states and may exhibit the same stopband and passband continuously from the start of the third time period until the end of the fourth time period).

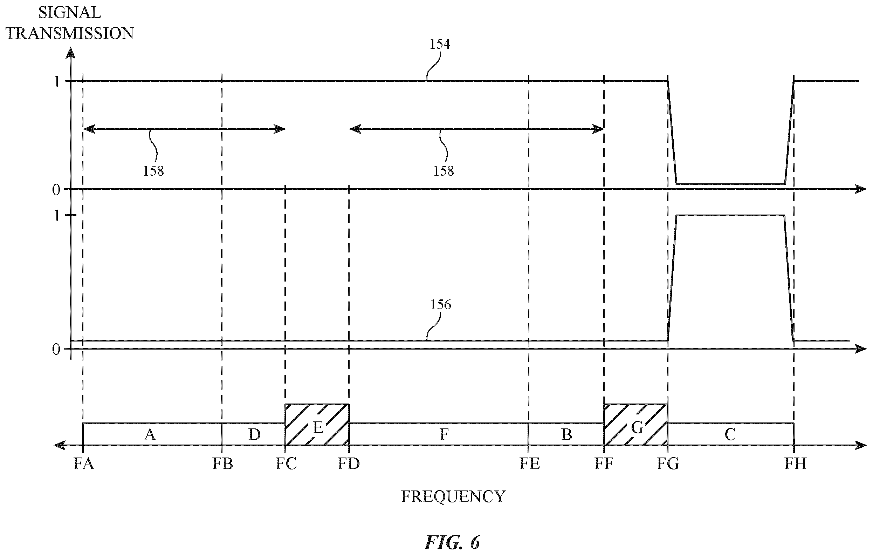

FIG. 6 illustrates the operation of switched filter circuitry 56-1 and switched filter circuitry 56-3 in the first state (e.g., while notch filter 58 of switched filter circuitry 56-1 is active and while BPF 70 of switched filter circuitry 56-3 is active). Curve 156 of FIG. 6 plots the signal transmission of switched filter circuitry 56-3 for RAT Y (FIGS. 2 and 3) while operated in its first state. As shown by curve 156, when switched filter circuitry 56-3 is in its first state, switched filter circuitry 56-3 exhibits a passband in (overlapping) band C. At the same time, switched filter circuitry 56-3 blocks, filters, or removes signals at frequencies outside of band C. This configures RF circuitry 44-2, port 46-3, radio-frequency transmission line path 32-3, and antenna 40-3 to convey radio-frequency signals 42-3 in band C without radio-frequency signals outside of band C passing along radio-frequency transmission line path 32-3 between antenna 40-3 and port 46-3.

At the same time, switched circuitry 56-1 may be placed in the first state of switched circuitry 56-1. Curve 154 of FIG. 6 plots the signal transmission of switched filter circuitry 56-1 for RAT X and RF circuitry 44-1 (FIGS. 2 and 3) while operated in its first state. As shown by curve 154, when switched filter circuitry 56-1 is in its first state, switched filter circuitry 56-1 exhibits a stopband in (overlapping) band C. At the same time, switched filter circuitry 56-1 passes/transmits signals at frequencies outside of band C. This configures RF circuitry 44-1, port 46-1, radio-frequency transmission line path 32-1, and antenna 40-1 to convey radio-frequency signals 42-1 outside of band C without radio-frequency signals within band C passing along radio-frequency transmission line path 32-1 between antenna 40-1 and port 46-1.

If desired, as shown by arrows 158, RF circuitry 44-1 may still access any of the bands of frequency range 146 outside of band C for RAT X while RF circuitry 44-2 concurrently conveys radio-frequency signals 42-3 within band C for RAT Y, without needing to change the state of switched filter circuitry 56-1 or switched filter circuitry 56-3. This may include accessing bands such as bands D and/or F if desired. RF circuitry 44-1 may, for example, scan or sweep radio-frequency signals 42-1 through one or more of the bands of frequency range 146 outside of band C while RF circuitry 44-2 concurrently conveys radio-frequency signals 42-3 within band C for RAT Y (e.g., without any adjustment to the state of switched filter circuitry 56-1, the stopband of switched filter circuitry 56-1, switched filter circuitry 56-3, or the passband of switched filter circuitry 56-3).

As one example, during a fifth time period different from the first, second, third, and fourth time periods described above in connection with FIGS. 4 and 5, RF circuitry 44-1, switched filter circuitry 56-1 in the first state (e.g., notch filter 58), and antenna 40-1 may convey radio-frequency signals 42-1 in band A. During the first time period, RF circuitry 44-2, switched filter circuitry 56-3 in the first state (e.g., BPF 70), and antenna 40-3 may convey radio-frequency signals 42-3 in band C. During a sixth time period after the fifth time period and different from the first, second, third, and fourth time periods, RF circuitry 44-1, switched filter circuitry 56-1 in the first state (e.g., notch filter 58), and antenna 40-1 may convey radio-frequency signals 42-1 in band B. During the sixth time period, RF circuitry 44-2, switched filter circuitry 56-3 in the first state (e.g., BPF 70), and antenna 40-3 may continue to convey radio-frequency signals 42-3 in band C. RF circuitry 44-1 may, for example, change the frequency of a local oscillator signal provided to a mixer in RF circuitry 44-1 between the fifth and sixth time periods (e.g., to accommodate a change in the carrier frequency of radio-frequency signals 42-1 between band A and band B between the fifth and sixth time periods). However, digital controller 48 may perform no adjustments to switched filter circuitry 56-1 and switched filter circuitry 56-3 between the fifth and sixth time periods (e.g., switched filter circuitry 56-1 and switched filter circuitry 56-3 may remain in their respective first states and may exhibit the same stopband and passband continuously from the start of the fifth time period until the end of the sixth time period).

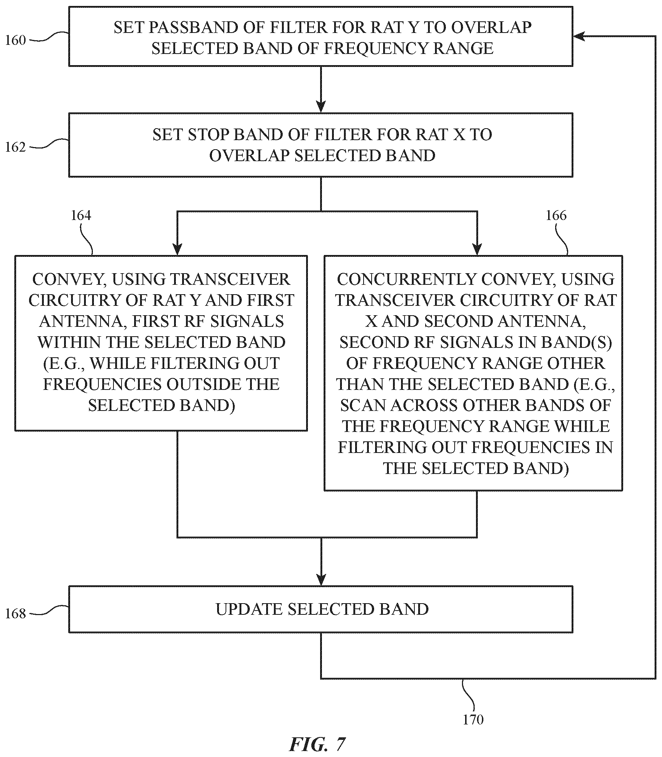

FIG. 7 is a flow chart of illustrative operations involved in concurrently conveying radio-frequency signals 42-1 using RAT X, RF circuitry 44-1, switched filter circuitry 56-1, and antenna 40-1 (FIGS. 2 and 3) and radio-frequency signals 42-3 using RAT Y, RF circuitry 44-1, switched filter circuitry 56-3, and antenna 40-3 (FIGS. 2 and 3).

At operation 160, digital controller 48 may select a frequency band of frequency range 146 for the radio-frequency signals 42-3 of RAT Y to be conveyed by RF circuitry 44-2 and antenna 40-3. Digital controller 48 may select the frequency band based on a RAT Y communications schedule for device 10 (e.g., as generated and/or stored on device 10 or on an external device), a software application running on device 10, or a user input, as three examples. Digital controller 48 may transmit a control signal over control path(s) 54 that sets the passband of switched filter circuitry 56-3 to overlap, align with, and/or contain the selected frequency band.

For example, if/when the selected frequency band is band A, digital controller 48 may control switched filter circuitry 56-3 to exhibit a passband that overlaps band A as shown in FIG. 4 (e.g., the control signal may place switched filter circuitry 56-3 in its third state, may activate BPF 74, may adjust a tunable passband of switched filter circuitry 56-3 to overlap band A, etc.). As another example, if/when the selected frequency band is band B, digital controller 48 may control switched filter circuitry 56-3 to exhibit a passband that overlaps band B as shown in FIG. 5 (e.g., the control signal may place switched filter circuitry 56-3 in its second state, may activate BPF 72, may adjust a tunable passband of switched filter circuitry 56-3 to overlap band B, etc.). As yet another example, if/when the selected frequency band is band C, digital controller 48 may control switched filter circuitry 56-3 to exhibit a passband that overlaps band C as shown in FIG. 6 (e.g., the control signal may place switched filter circuitry 56-3 in its first state, may activate BPF 70, may adjust a tunable passband of switched filter circuitry 56-3 to overlap band A, etc.).

At operation 162, digital controller 48 may transmit a control signal over control path(s) 54 that sets the stopband of switched filter circuitry 56-1 to overlap, align with, and/or contain the selected frequency band. Operation 162 may be performed concurrent with operation 160 if desired.

For example, if/when the selected frequency band is band A, digital controller 48 may control switched filter circuitry 56-1 to exhibit a stopband that overlaps band A as shown in FIG. 4 (e.g., the control signal may place switched filter circuitry 56-1 in its third state, may activate notch filter 62, may adjust a tunable stopband of switched filter circuitry 56-1 to overlap band A, etc.). As another example, if/when the selected frequency band is band B, digital controller 48 may control switched filter circuitry 56-1 to exhibit a stopband that overlaps band B as shown in FIG. 5 (e.g., the control signal may place switched filter circuitry 56-1 in its second state, may activate notch filter 60, may adjust a tunable stopband of switched filter circuitry 56-1 to overlap band B, etc.). As yet another example, if/when the selected frequency band is band C, digital controller 48 may control switched filter circuitry 56-1 to exhibit a stopband that overlaps band C as shown in FIG. 6 (e.g., the control signal may place switched filter circuitry 56-1 in its first state, may activate notch filter 58, may adjust a tunable stopband of switched filter circuitry 56-1 to overlap band A, etc.).

Operations 164 and 166 may be performed concurrently (e.g., within the same time period, frame time, or other time interval as dictated by the communications schedule of device 10 for RAT Y). At operation 164, RF circuitry 44-2 may convey radio-frequency signals 42-3 of RAT Y in the selected frequency band via radio-frequency transmission line path 32-3, switched filter circuitry 56-3, and antenna 40-3. Since the passband of switched filter circuitry 56-3 overlaps the selected frequency band, switched filter circuitry 56-3 may pass radio-frequency signals 42-3 without substantially attenuating the radio-frequency signals. At the same time, switched filter circuitry 56-3 may filter out radio-frequency signals at frequencies outside of the selected frequency band.

At operation 166, RF circuitry 44-1 may convey radio-frequency signals 42-1 of RAT X in one or more bands outside of the selected frequency band via radio-frequency transmission line path 32-1, RFFE module 30-1, switched filter circuitry 56-1, and antenna 40-1. Since the stopband of switched filter circuitry 56-1 overlaps the selected frequency band, switched filter circuitry 56-1 filters out radio-frequency signals in the selected frequency band without substantially attenuating the radio-frequency signals 42-1 conveyed by RF circuitry 44-1. If desired, RF circuitry 44-1 may scan or sweep radio-frequency signals 42-1 between different bands of frequency range 146 outside of the selected frequency band (e.g., between two or more time periods, frame times, or other time intervals as dictated by the communications schedule of device 10 for RAT Y) without reconfiguring the stopband of switched filter circuitry 56-1. For example, RF circuitry 44-1, radio-frequency transmission line path 32-1, RFFE module 30-1, switched filter circuitry 56-1, and antenna 40-1 may convey radio-frequency signals 42-1 in a first band outside the selected frequency band during a first time period and may switch to conveying radio-frequency signals 42-1 in a second band outside the selected frequency band all without adjusting the stopband of switched filter circuitry 56-1. In this example, RF circuitry 44-2, radio-frequency transmission line path 32-3, switched filter circuitry 56-3, and antenna 40-3 may convey radio-frequency signals 42-3 in the selected frequency band during both the first and second time periods (e.g., without adjusting the passband of switched filter circuitry 56-3).

At operation 168, digital controller 48 may update the selected frequency band used by RF circuitry 44-2 to convey radio-frequency signals 42-3 under RAT Y. Digital controller 48 may update the selected frequency band based on the RAT Y communications schedule for device 10, a software application running on device 10, or a user input, as three examples. Processing may then loop back to operation 160 (as shown by path 170) to reconfigure switched filter circuitry 56-1 and 56-3 based on the updated selected frequency band. In this way, RF circuitry 44-1 may sweep through different bands from the set of bands for communications under RAT X while RF circuitry 44-2 continues to communicate under RAT Y in a selected band from the set of bands, without wireless circuitry 24 needing to expend resources to reconfigure switched filter circuitry 56-1 and 56-3 until there is a change in the selected frequency band used for communications under RAT Y. The example of FIG. 7 is illustrative and non-limiting. The operations of FIG. 7 may be adapted to accommodate any desired number of RATs, any desired number of antennas 40, and any desired number of ports 46 of transceiver circuitry 28.

The example of FIGS. 1-7 in which RF circuitry 44-1 implements a different RAT than RF circuitry 44-2 is illustrative and non-limiting. If desired, RF circuitry 44-2 may operate under the same RAT as RF circuitry 44-1 and may serve to augment the performance of RF circuitry 44-1 in that RAT (e.g., RAT Y may be the same RAT as RAT X but may represent one or more enhanced, augmented, or additional features of that RAT not otherwise achievable in the absence of RF circuitry 44-2). For example, when transceiver circuitry 28 implements a Wi-Fi Multi-Link Operation (MLO) scheme or Enhanced Multilink Single-Radio (EMLSR) scheme, RF circuitry 44-1 may represent a first Wi-Fi core of transceiver circuitry 28 for accessing a given band whereas RF circuitry 44-2 may represent a second Wi-Fi core of transceiver circuitry 28 for accessing a different part of the spectrum. In an MLO scheme, RF circuitry 44-1 may have access to non-contiguous frequency spectrum while RF circuitry 44-2 may access a single band at a time.

For one or more aspects, at least one of the components set forth in one or more of the preceding figures may be configured to perform one or more operations, techniques, processes, or methods as set forth in the example section below.

### Examples

Exemplary wireless circuitry, electronic devices, methods, and non-transitory computer-readable storage media are set out in the following items. Example 1 includes wireless circuitry comprising:
first transceiver circuitry that implements a first radio access technology (RAT); a first radio-frequency transmission line path coupled to the first transceiver circuitry; a switchable notch filter on the first radio-frequency transmission line path and having a stopband; second transceiver circuitry that implements a second RAT different from the first RAT; a second radio-frequency transmission line path coupled to the second transceiver circuitry; and a switchable bandpass filter on the second radio-frequency transmission line path, wherein a passband of the switchable bandpass filter overlaps the stopband of the switchable notch filter.

Example 2 includes the wireless circuitry of example 1, further optionally comprising: a digital controller coupled to the switchable notch filter and the switchable bandpass filter over a digital backbone, wherein the digital controller is optionally configured to adjust the passband of the switchable bandpass filter and is configured to adjust the stopband of the switchable bandpass filter to overlap the adjusted passband of the switchable bandpass filter.

Example 3 includes the wireless circuitry of example 1, wherein the first transceiver circuitry is optionally configured to convey a first radio-frequency signal over the first radio-frequency transmission line path, the second transceiver circuitry is optionally configured to convey a second radio-frequency signal over the second radio-frequency transmission line path, and the first transceiver circuitry is configured to scan, without adjustment to the switchable notch filter, the first radio-frequency signal over a set of bands while the second radio-frequency transceiver circuitry concurrently optionally conveys the second radio-frequency signal over the second radio-frequency transmission line path.

Example 4 includes the wireless circuitry of example 3, further optionally comprising: a bandpass filter interposed on the first radio-frequency transmission line path between the switchable notch filter and the first transceiver circuitry, wherein the bandpass filter optionally has an additional passband that overlaps the set of bands.

Example 5 includes the wireless circuitry of example 4, further optionally comprising: a radio-frequency front end module interposed on the first radio-frequency transmission line path between the bandpass filter and the switchable notch filter.

Example 6 includes the wireless circuitry of example 4, wherein the set of bands optionally comprises Unlicensed National Information Infrastructure (UNII) bands between 5 GHz and 10 GHz.

Example 7 includes the wireless circuitry of example 6 wherein: during a first time period, the passband and the stopband overlap UNII band 1 and the set of bands optionally comprises UNII band 3 and UNII band 5; during a second time period different than the first time period, the passband and the stopband overlap UNII band 3 and the set of bands optionally comprises UNII band 1 and UNII band 5; and during a third time period different than the first and second time periods, the passband and the stopband overlap UNII band 5 and the set of bands comprises UNII band 1 and UNII band 3.

Example 8 includes the wireless circuitry of example 7, wherein the first RAT optionally comprises a wireless local area network RAT and wherein the second RAT optionally comprises an ultra-low latency audio RAT.

Example 9 includes the wireless circuitry of example 1, wherein the first radio-frequency transmission line path is optionally coupled to a first antenna and a first port of the first transceiver circuitry and wherein the second radio-frequency transmission line path is optionally coupled to a second antenna, the wireless circuitry further optionally comprising: a third radio-frequency transmission line path coupled between a second port of the first transceiver circuitry and a third antenna; and an additional switchable notch filter on the third radio-frequency transmission line path and having an additional stopband that overlaps the stopband of the switchable notch filter and the passband of the switchable bandpass filter.

Example 10 includes the wireless circuitry of example 1, further optionally comprising: a radio chip, wherein the first transceiver circuitry optionally comprises a first core of the radio chip, the first core has a port coupled to the first radio-frequency transmission line path, the second transceiver circuitry optionally comprises a second core of the radio chip, and the second core is coupled to the second radio-frequency transmission line path.

Example 11 includes the wireless circuitry of example 1, further optionally comprising: a first radio chip that includes the first transceiver circuitry and that has a first port coupled to the first radio-frequency transmission line path; and a second radio chip that includes the second transceiver circuitry and that has a second port coupled to the second radio-frequency transmission line path.

Example 12 includes wireless circuitry comprising: first and second transmission line paths; transceiver circuitry coupled to the first and second transmission line paths, the transceiver circuitry being configured to convey a first radio-frequency (RF) signal of a first radio access technology (RAT) over the first transmission line path and being configured to convey a second RF signal of a second RAT different from the first RAT over the second transmission line path; first and second switches on the first transmission line path; first and second notch filters coupled in parallel between the first and second switches, the first notch filter having a first stopband and the second notch filter having a second stopband different from the first stopband; third and fourth switches on the second transmission line path; and first and second bandpass filters coupled in parallel between the third and fourth switches, the first bandpass filter having a first passband that overlaps the first stopband and the second bandpass filter having a second passband that overlaps the second stopband.

Example 13 includes the wireless circuitry of example 12, further optionally comprising: a third notch filter coupled in parallel with the first and second notch filters between the first and second switches, the third notch filter having a third stopband different from the first and second stopbands.

Example 14 includes the wireless circuitry of example 13, further optionally comprising: a third bandpass filter coupled in parallel with the first and second bandpass filters between the third and fourth switches, the third bandpass filter having a third passband that overlaps the third stopband.

Example 15 includes the wireless circuitry of example 14 wherein the first, second, third, and fourth switches optionally comprise single-pole three-throw (SP3T) switches.

Example 16 includes the wireless circuitry of example 12, further optionally comprising a digital controller configured to: control the first and second switches to activate the first notch filter during a first time period; control the third and fourth switches to activate the first bandpass filter during the first time period; control the first and second switches to activate the second notch filter during a second time period different from the first time period; and control the third and fourth switches to activate the second bandpass filter during the second time period.

Example 17 includes the wireless circuitry of example 16, further optionally comprising: a third bandpass filter interposed on the first transmission line path between the first switch and the transceiver circuitry, wherein the third bandpass filter optionally has a third passband that overlaps the first and second passbands.

Example 18 includes an electronic device comprising: transceiver circuitry having first and second ports, the transceiver circuitry being configured to convey a first radio-frequency signal using a first radio access technology (RAT) over the first port and being configured to concurrently convey a second radio-frequency signal using a second RAT over the second port, the second RAT being different than the first RAT; a first antenna; a second antenna; a first transmission line path that couples the first port to the first antenna; a second transmission line path that couples the second port to the second antenna; a switched notch filter on the first transmission line path; a switched bandpass filter on the second transmission line path; a radio-frequency front end (RFFE) module on the first transmission line path between the switched notch filter and the first port; and a bandpass filter on the first transmission line path between the RFFE module and the first port.

Example 19 includes the electronic device of example 18, wherein the transceiver circuitry optionally has a third port and is configured to convey a third radio-frequency signal using the first RAT over the third port, the electronic device further optionally comprising: a third antenna; a third transmission line path that couples a third port of the transceiver circuitry to the third antenna; an additional switched notch filter on the third transmission line path, wherein the switched notch filter and the additional switched notch filter are optionally configured to exhibit a same stopband; an additional RFFE module on the third transmission line path between the additional switched notch filter and the third port; and an additional bandpass filter on the third transmission line path between the additional RFFE module and the third port, wherein the bandpass filter and the additional bandpass filter are optionally configured to exhibit a same passband.

Example 20 includes the electronic device of example 18, further optionally comprising one or more processors configured to control the switched notch filter to exhibit a stopband that overlaps a passband of the switched bandpass filter, wherein the transceiver circuitry is optionally configured to sweep, concurrent with the transceiver circuitry conveying the second radio-frequency signal, the first radio-frequency signal over a set of frequency bands outside of the stopband without adjustment to the switched notch filter and the switched bandpass filter.

Example 21 includes a method of operating wireless circuitry comprising: transmitting, using a first antenna, a first radio-frequency signal of a first radio access technology (RAT); filtering the first radio-frequency signal using a switchable notch filter; transmitting, using a second antenna, a second radio-frequency signal of a second RAT different from the first RAT concurrent with transmission of the first radio-frequency signal by the first antenna; and filtering the second radio-frequency signal using a switchable bandpass filter, wherein the switchable bandpass filter has a passband that overlaps a stopband of the switchable notch filter.

Example 22 includes the method of example 21, further optionally comprising: adjusting the passband of the switchable bandpass filter; and adjusting the stopband of the switchable notch filter to align with the adjusted passband of the switchable bandpass filter.

Example 23 includes the method of example 21, wherein transmitting the first radio-frequency signal optionally comprises transmitting the first radio-frequency signal using a first port of transceiver circuitry and wherein transmitting the second radio-frequency signal optionally comprises transmitting the second radio-frequency signal using a second port of transceiver circuitry.

Example 24 includes the method of example 23, wherein transmitting the second radio-frequency signal optionally comprises transmitting the second radio-frequency signal in a first band that overlaps the passband and the stopband, the method further optionally comprising: transmitting, using the first port of the transceiver circuitry, the first radio-frequency signal in a second band concurrent with transmission of the second radio-frequency signal in the first band by the second port of the transceiver circuitry.

Example 25 includes the method of example 24, further optionally comprising: changing, using the transceiver circuitry, a frequency of the first radio-frequency signal from the second band to a third band concurrent with transmission of the second radio-frequency signal in the first band by the second port of the transceiver circuitry; and transmitting, using the first port of the transceiver circuitry, the first radio-frequency signal in the third band concurrent with transmission of the second radio-frequency signal in the first band by the second port of the transceiver circuitry.

Example 26 includes the method of example 25, wherein the switchable notch filter optionally has a same state concurrent with transmission of the first radio-frequency signal in the second band, concurrent with changing the frequency of the first radio-frequency signal from the second band to the third band, and concurrent with transmission of the first radio-frequency signal in the third band.

Example 27 includes the method of example 25, further optionally comprising: filtering the first radio-frequency signal using a fixed bandpass filter coupled between the first port and the switchable notch filter, wherein the fixed bandpass filter optionally has an additional passband that overlaps the first, second, and third bands.

Example 28 includes the method of example 27, wherein the first band optionally comprises a first Unlicensed National Information Infrastructure (UNII) band, the second band optionally comprises a second UNII band, and the third band comprises a third UNII band.

Example 29 includes the method of example 28, wherein the first UNII band optionally comprises UNII band 1, the second UNII band optionally comprises UNII band 3, and the third UNII band optionally comprises UNII band 5.

Example 30 includes the method of example 28, wherein the first RAT optionally comprises a wireless local area network (WLAN) RAT and the second RAT optionally comprises an ultra-low latency audio RAT.

Example 31 includes a method of operating wireless circuitry comprising: setting, using one or more processors, a passband of a switchable bandpass filter to overlap a first band during a first time period and a second time period subsequent to the first time period; setting, using the one or more processors, a stopband of a switchable notch filter to overlap the first band during the first and second time periods; transmitting, using a first port of a transceiver, the switchable bandpass filter, and a first antenna, a first radio-frequency signal of a first radio access technology (RAT) in the first band during the first and second time periods; transmitting, using a second port of the transceiver, the switchable notch filter, and a second antenna, a second radio-frequency signal of a second RAT in a second band during the first time period and concurrent with transmission of the first radio-frequency signal in the first band; and transmitting, using the second port of the transceiver, the switchable notch filter, and the second antenna, the second radio-frequency signal in a third band during the second time period and concurrent with transmission of the first radio-frequency signal in the first band.

Example 32 includes the method of example 31, wherein the passband of the switchable bandpass filter and the stopband of the switchable notch filter optionally overlap the first band continuously from a beginning of the first time period until and an end of the second time period.

Example 33 includes the method of example 31, further optionally comprising: setting, using the one or more processors, the passband of the switchable bandpass filter to overlap the second band during a third time period subsequent to the second time period and during a fourth time period subsequent to the third time period; setting, using the one or more processors, the stopband of the switchable notch filter to overlap the second band during the third and fourth time periods; transmitting, using the first port of a transceiver, the switchable bandpass filter, and the first antenna, the first radio-frequency signal in the second band during the third and fourth time periods; and transmitting, using the second port of the transceiver, the switchable notch filter, and the second antenna, the second radio-frequency signal in the first band during the third time period and concurrent with transmission of the first radio-frequency signal in the second band.

Example 34 includes the method of example 33, further optionally comprising: transmitting, using the second port of the transceiver, the switchable notch filter, and the second antenna, the second radio-frequency signal in the third band during the fourth time period and concurrent with transmission of the first radio-frequency signal in the second band.

Example 35 includes the method of example 34, further optionally comprising: setting, using the one or more processors, the passband of the switchable bandpass filter to overlap the third band during a fifth time period subsequent to the fourth time period and during a sixth time period subsequent to the fifth time period; setting, using the one or more processors, the stopband of the switchable notch filter to overlap the third band during the fifth and sixth time periods; transmitting, using the first port of a transceiver, the switchable bandpass filter, and the first antenna, the first radio-frequency signal in the third band during the fifth and sixth time periods; transmitting, using the second port of the transceiver, the switchable notch filter, and the second antenna, the second radio-frequency signal in the first band during the fifth time period and concurrent with transmission of the first radio-frequency signal in the third band; and transmitting, using the second port of the transceiver, the switchable notch filter, and the second antenna, the second radio-frequency signal in the second band during the sixth time period and concurrent with transmission of the first radio-frequency signal in the third band.

Example 36 includes the method of example 31, further optionally comprising: filtering, during the first and second time periods, the second radio-frequency signal using a fixed bandpass filter coupled between the second port of the transceiver and the switchable notch filter, wherein the fixed bandpass filter optionally has an additional passband that overlaps the first, second, and third bands.

Example 37 includes the method of example 31, wherein the switchable notch filter and the switchable bandpass filter are optionally not adjusted between a beginning of the first time period and an end of the second time period.

Example 38 includes a non-transitory computer-readable storage medium storing one or more programs configured to be executed by one or more processors of an electronic device, the one or more programs including instructions for: adjusting first and second switches to couple a first bandpass filter between a first port of transceiver circuitry and a first antenna, the first bandpass filter having a first passband; adjusting second and third switches to couple a first notch filter between a second port of the transceiver circuitry and a second antenna, the first notch filter having a first stopband that overlaps the first passband; transmitting, using a first portion of the transceiver circuitry that implements a first radio access technology (RAT), a first radio-frequency signal in a first band via the first bandpass filter and a first antenna, wherein the first band overlaps the first passband and the first stopband; and transmitting, using a second portion of the transceiver circuitry that implements a second RAT, a second radio-frequency signal in a second band via the first notch filter and a second antenna concurrent with transmission of the first radio-frequency signal in the first band by the first portion of the transceiver circuitry.

Example 39 includes the non-transitory computer-readable storage medium of example 38, the one or more programs further optionally including instructions for: transmitting, using the second portion of the transceiver circuitry, the second radio-frequency signal in a third band via the first notch filter and the second antenna concurrent with transmission of the first radio-frequency signal in the first band by the first portion of the transceiver circuitry.

Example 40 includes the non-transitory computer-readable storage medium of example 19, the one or more programs further optionally including instructions for: adjusting the first and second switches to couple a second bandpass filter between the first port of transceiver circuitry and the first antenna, the second bandpass filter having a second passband different than the first passband; adjusting the second and third switches to couple a second notch filter between the second port of the transceiver circuitry and the second antenna, the second notch filter having a second stopband that overlaps the second passband; transmitting, using the first portion of the transceiver circuitry, the first radio-frequency signal in a second band via the second bandpass filter and the first antenna, wherein the second band overlaps the second passband and the second stopband; and transmitting, using the second portion of the transceiver circuitry, the second radio-frequency signal in the first band via the second notch filter and the second antenna concurrent with transmission of the first radio-frequency signal in the second band by the first portion of the transceiver circuitry.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

Device 10 may gather and/or use personally identifiable information. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The foregoing is merely illustrative and various modifications can be made to the described embodiments. The foregoing embodiments may be implemented individually or in any combination.

## Claims

1. Wireless circuitry comprising:
first transceiver circuitry that implements a first radio access technology (RAT);
a first radio-frequency transmission line path coupled to the first transceiver circuitry;
a switchable notch filter on the first radio-frequency transmission line path and having a stopband;
second transceiver circuitry that implements a second RAT different from the first RAT;
a second radio-frequency transmission line path coupled to the second transceiver circuitry; and
a switchable bandpass filter on the second radio-frequency transmission line path, wherein a passband of the switchable bandpass filter overlaps the stopband of the switchable notch filter.

2. The wireless circuitry of claim 1, further comprising:
a digital controller coupled to the switchable notch filter and the switchable bandpass filter over a digital backbone, wherein the digital controller is configured to adjust the passband of the switchable bandpass filter and is configured to adjust the stopband of the switchable bandpass filter to overlap the adjusted passband of the switchable bandpass filter.

3. The wireless circuitry of claim 1, wherein the first transceiver circuitry is configured to convey a first radio-frequency signal over the first radio-frequency transmission line path, the second transceiver circuitry is configured to convey a second radio-frequency signal over the second radio-frequency transmission line path, and the first transceiver circuitry is configured to scan, without adjustment to the switchable notch filter, the first radio-frequency signal over a set of bands while the second radio-frequency transceiver circuitry concurrently conveys the second radio-frequency signal over the second radio-frequency transmission line path.

4. The wireless circuitry of claim 3, further comprising:
a bandpass filter interposed on the first radio-frequency transmission line path between the switchable notch filter and the first transceiver circuitry, wherein the bandpass filter has an additional passband that overlaps the set of bands.

5. The wireless circuitry of claim 4, further comprising:
a radio-frequency front end module interposed on the first radio-frequency transmission line path between the bandpass filter and the switchable notch filter.

6. The wireless circuitry of claim 4, wherein the set of bands comprises Unlicensed National Information Infrastructure (UNII) bands between 5 GHz and 10 GHz.

7. The wireless circuitry of claim 6 wherein:
during a first time period, the passband and the stopband overlap UNII band 1 and the set of bands comprises UNII band 3 and UNII band 5;
during a second time period different than the first time period, the passband and the stopband overlap UNII band 3 and the set of bands comprises UNII band 1 and UNII band 5; and
during a third time period different than the first and second time periods, the passband and the stopband overlap UNII band 5 and the set of bands comprises UNII band 1 and UNII band 3.

8. The wireless circuitry of claim 7, wherein the first RAT comprises a wireless local area network RAT and wherein the second RAT comprises an ultra-low latency audio RAT.

9. The wireless circuitry of claim 1, wherein the first radio-frequency transmission line path is coupled to a first antenna and a first port of the first transceiver circuitry and wherein the second radio-frequency transmission line path is coupled to a second antenna, the wireless circuitry further comprising:
a third radio-frequency transmission line path coupled between a second port of the first transceiver circuitry and a third antenna; and
an additional switchable notch filter on the third radio-frequency transmission line path and having an additional stopband that overlaps the stopband of the switchable notch filter and the passband of the switchable bandpass filter.

10. The wireless circuitry of claim **1,** further comprising:
a radio chip, wherein the first transceiver circuitry comprises a first core of the radio chip, the first core has a port coupled to the first radio-frequency transmission line path, the second transceiver circuitry comprises a second core of the radio chip, and the second core is coupled to the second radio-frequency transmission line path.

11. The wireless circuitry of claim 1, further comprising:
a first radio chip that includes the first transceiver circuitry and that has a first port coupled to the first radio-frequency transmission line path; and
a second radio chip that includes the second transceiver circuitry and that has a second port coupled to the second radio-frequency transmission line path.
